(19) Europäisches Patentamt / European Patent Office / Office européen des brevets

(11) **EP 4 306 554 A1**

(12) **EUROPEAN PATENT APPLICATION**
published in accordance with Art. 153(4) EPC


(43) Date of publication:
**17.01.2024 Bulletin 2024/03**

(21) Application number: **22767242.5**

(22) Date of filing: **10.03.2022**

(51) International Patent Classification (IPC):
***C08F 18/04*** *(2006.01)* ***C08F 293/00*** *(2006.01)*
***C08F 2/38*** *(2006.01)*

(52) Cooperative Patent Classification (CPC):
**C08F 2/38; C08F 18/04; C08F 293/00**

(86) International application number:
**PCT/JP2022/010635**

(87) International publication number:
**WO 2022/191288 (15.09.2022 Gazette 2022/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.03.2021 JP 2021038697**



(71) Applicant: **Kuraray Co., Ltd.**
**Kurashiki-shi, Okayama 710-0801 (JP)**

(72) Inventors:
- **TAKAYAMA, Takumi**
  **Kurashiki-shi, Okayama 710-0801 (JP)**
- **TSUCHIYA, Hinako**
  **Kurashiki-shi, Okayama 710-0801 (JP)**
- **MAEKAWA, Kazuhiko**
  **Kurashiki-shi, Okayama 710-0801 (JP)**

(74) Representative: **Müller-Boré & Partner**
**Patentanwälte PartG mbB**
**Friedenheimer Brücke 21**
**80639 München (DE)**


(54) **METHOD FOR PRODUCING POLYMER, COMPOSITION FOR RADICAL POLYMERIZATION, AND RADICAL POLYMERIZATION INHIBITOR**


(57) A method of producing a polymer comprises a polymerization step of obtaining a polymer by controlled radical polymerization of a monomer (Y) in the presence of an organic compound (A) represented by a formula (I) below and a radical generator (B), wherein a molar ratio (B/A) of (B) to (A) is from 0.5 to 20. The production method allows synthesis of a highly safe polymer with a high molecular weight while precisely controlling the molecular sequence, the end structure, and the like. In addition, the production method is low in toxicity, environmentally friendly, and operated at low costs.

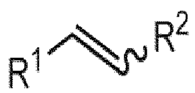

(I)

[In the formula (I), $R^1$ denotes an alkenyl group or an aryl group, $R^2$ denotes a group represented by a formula (II) or (III) below, and $R^1$ and $R^2$ optionally form a ring by coupling with each other.]

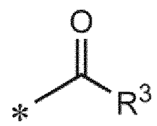

(II)

[In the formula (II), $R^3$ denotes a hydrogen atom, a halogen atom, an alkyl group, an aryl group, an alkenyl group, an alkoxy group, an amino group, a nitro group, a cyano group, an acetyl group, a trifluoromethyl group, or a hydroxyl group, and * denotes a bond.]

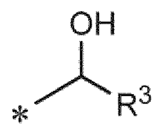

(III)

[In the formula (III), $R^3$ is the same as that in the formula (II) above and * denotes a bond.]


EP 4 306 554 A1

[FIG. 1]

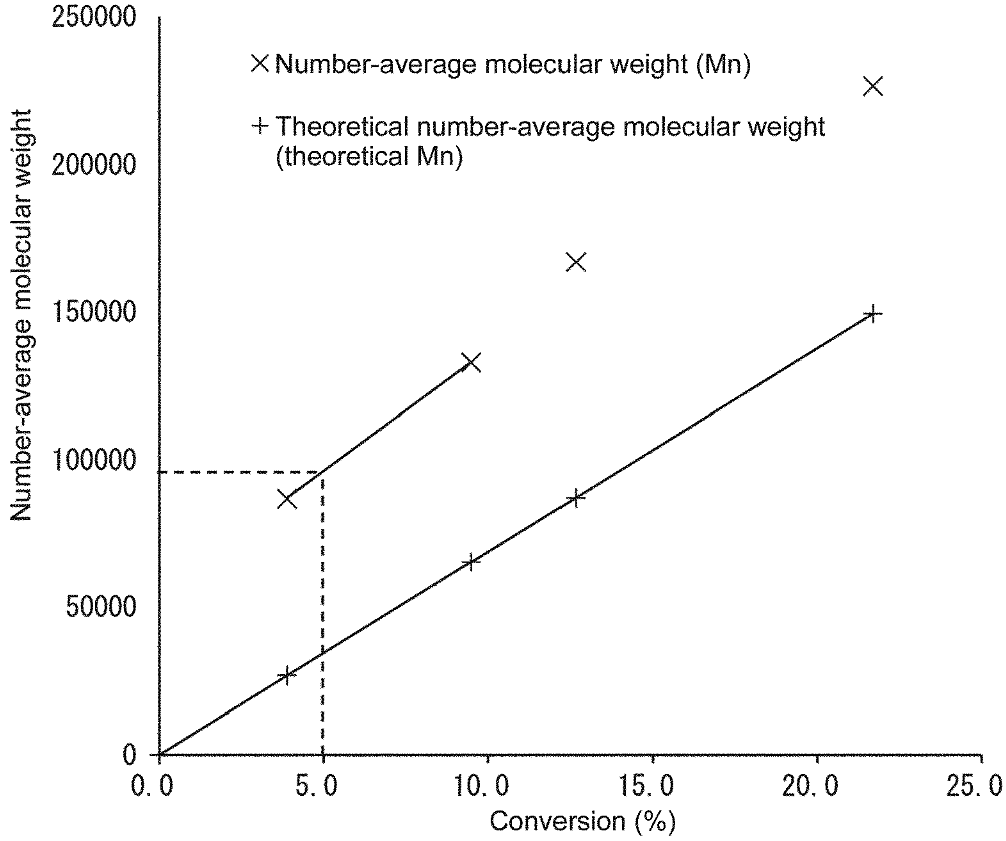

×Number-average molecular weight (Mn)
+Theoretical number-average molecular weight (theoretical Mn)
Number-average molecular weight
250000
200000
150000
100000
50000
0
0. 0
5. 0
10. 0
15. 0
20. 0
25. 0
Conversion (%)

## Description

### TECHNICAL FIELD

The present invention relates to a method of producing a polymer having a polymerization step of polymerizing a polymerizable monomer by controlled radical polymerization. The present invention also relates to a composition for radical polymerization and a radical polymerization control agent used for such a production method.

### BACKGROUND ART

Polyvinyl alcohol resins are crystalline water-soluble polymer materials and are widely applied to emulsifiers, suspensions, surfactants, fiber treating agents, various binders, paper treating agents, adhesives, films, and the like using their excellent water solubility and film properties (strength, grease resistance, film formability, oxygen gas barrier properties, etc.). Conventionally, polyvinyl alcohols having different degrees of saponification and polymerization are employed depending on the use. Various modified polyvinyl alcohols with special functions by introducing a functional group into polyvinyl alcohols are proposed.

Polyvinyl alcohols are industrially produced by saponification of polyvinyl acetate that is obtained by radically polymerizing vinyl acetate. In radical polymerization reaction of vinyl acetate, various types of side reaction, such as chain transfer reaction and recombination termination reaction, occur concurrently during the polymerization, and thus it is generally considered difficult to precisely control the molecular sequence, the end structure, and the like of the polyvinyl acetate (and polyvinyl alcohols) thus obtained.

In recent years, with the advances in the so-called living radical polymerization technique, some methods for controlling radical polymerization reaction of vinyl acetate have been proposed. For example, a method is proposed that comprises radical polymerization reaction of vinyl acetate in the presence of a radical polymerization initiator and a specific control agent to obtain polyvinyl acetate having a precisely controlled structure. In such polymerization reaction, a propagating radical end of the molecular chain of polyvinyl acetate is covalently bonded with the control agent to form dormant species. The polymerization progresses while establishing an equilibrium between the dormant species and radical species generated by dissociation of the dormant species. Such polymerization reaction is referred to as controlled radical polymerization.

However, it used to be difficult to obtain polyvinyl acetate with a high molecular weight by controlled radical polymerization in the past. This is considered to be because a radical is thermally extremely unstable that is generated at an end of a head-to-head bond (a bond having acetyl groups of vinyl acetate adjacent to each other) generated with a certain probability during the polymerization and the equilibrium is thus largely shifted to the dormant species side, resulting in no further progress of the polymerization reaction. In contrast, in a case where the polymerization temperature is raised to promote thermal dissociation of the dormant species, the controllability becomes worse in spite of the progress of the reaction. Accordingly, it has been extremely difficult to obtain polyvinyl acetate with a high molecular weight while maintaining the controllability.

Regarding such a problem, a technique has been proposed to synthesize polyvinyl acetate having a controlled structure and a high molecular weight by controlled radical polymerization using an organic cobalt complex as a control agent. In the polymerization reaction, the propagating radical end of the molecular chain of polyvinyl acetate is covalently bonded with a cobalt atom of an organic cobalt complex to form dormant species. The polymerization progresses while establishing an equilibrium between the dormant species and radical species generated by dissociation of the dormant species. For example, Non-Patent Document 1 reports an example in which vinyl acetate is polymerized in the presence of cobalt (II) acetylacetonate, thereby synthesizing polyvinyl acetate having a number-average molecular weight (Mn) of 99,000 and a molecular weight distribution (Mw/Mn) of 1.33.

Patent Document 1 describes that, in contrast to a polyvinyl alcohol obtained by controlled radical polymerization having a problem of being markedly colored, a less colored polyvinyl alcohol is obtained by contacting an aqueous solution containing a water-soluble ligand with a polyvinyl acetate solution obtained by controlled radical polymerization using an organic cobalt complex as a control agent and extracting and removing the cobalt complex, followed by saponification.

However, such a polymerization method using a metal complex has a disadvantage that the used complex is not readily completely removed from the polymer to be obtained. Since many transition metals are highly toxic, the toxicity of such a transition metal remained in shaped articles using the polymer to be obtained sometimes causes an environmental problem and thus it is difficult to use shaped articles containing the transition metal for food packaging materials, biological and medical materials, and the like. The toxicity of disused complexes and complexes removed from the polymer after reaction also sometimes causes an environmental problem. In addition, a large amount of extract has to be used to remove the complex and the process becomes more complicated, resulting in a problem of increasing the costs. Moreover, metal complexes have a problem of being usually expensive and requiring troublesome synthesis.

Living radical polymerization methods are also known that do not have to use metal complexes. For example, there are known methods using a nitroxyl-based, iodine-based, or dithioester-based compound. However, in these methods, a special protecting group has to be introduced into a polymer propagating chain, and the methods have a disadvantage that the protecting group is very expensive. The methods also have a disadvantage that polymerization reaction has to be carried out at high temperatures (e.g., 110°C or more). The methods also have a disadvantage that the polymerization controllability of vinyl esters is insufficient, causing difficulty in obtaining a high molecular weight polymer. The methods also have a disadvantage that polymers to be generated are prone to have unfavorable properties, such as being colored and having an odor. The methods also have a risk that the used compounds are not readily removed completely from the resulting products, and due to the residual organic halogen compounds, organic sulfur compounds, and the like, health and environmental problems may occur.

Cinnamic acid and derivatives thereof are widely present in nature and are industrially used as food additives and perfumes in general. It is known that cinnamic acids are not readily homopolymerized although having an unsaturated double bond, and under limited conditions such as copolymerization with fumaric diester, radical polymerization of cinnamic acid monomers progresses (Non-Patent Document 2, Patent Document 2). In addition, it is known that a polyvinyl alcohol generating fewer fish eyes and less odors during molding is obtained by adding cinnamic acids to a polyvinyl acetate solution after polymerization (Patent Document 3). However, there is no known example of using cinnamic acids as a control agent for controlled radical polymerization and such a function has not been academically expected, either.

PRIOR ART DOCUMENT

PATENT DOCUMENT

Patent Document 1: WO 2017-170974
Patent Document 2: JP 2014-129503 A
Patent Document 3: JP 2002-053728 A

NON-PATENT DOCUMENT

Non-Patent Document 1: Highly Efficient Cobalt-Mediated Radical Polymerization of Vinyl Acetate, Angewandte Chemie International Edition, 2005, vol. 44, p. 1101-1104
Non-Patent Document 2: Radical Copolymerizability of Alkyl Cinnamate and Alkyl Atropate, Journal of Industrial Chemistry, Vol. 70, No. 11, 1967, p. 1941-1944

SUMMARY OF THE INVENTION

PROBLEMS TO BE SOLVED BY THE INVENTION

The present invention has been made to solve the above problems, and it is an object thereof to provide a method of producing a polymer that is low in toxicity and environmentally friendly, has high polymerization controllability, yields a high molecular weight polymer, and is operated at low costs. It is also an object thereof to provide a composition for radical polymerization and a radical polymerization control agent that are preferably used for such a production method.

MEANS FOR SOLVING THE PROBLEMS

The above problems are solved by providing a method of producing a polymer, comprising a polymerization step of obtaining a polymer by controlled radical polymerization of a monomer (Y) in the presence of an organic compound (A) represented by a formula (I) below and a radical generator (B), wherein
a molar ratio (B/A) of (B) to (A) is from 0.5 to 20.

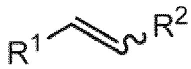
(I)

[In the formula (I), $R^1$ denotes an alkenyl group or an aryl group, $R^2$ denotes a group represented by a formula (II) or (III) below, and $R^1$ and $R^2$ optionally form a ring by coupling with each other.]

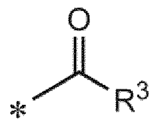

(II)

[In the formula (II), $R^3$ denotes a hydrogen atom, a halogen atom, an alkyl group, an aryl group, an alkenyl group, an alkoxy group, an amino group, a nitro group, a cyano group, an acetyl group, a trifluoromethyl group, or a hydroxyl group, and * denotes a bond.]

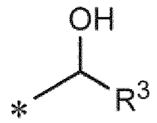

(III)

[In the formula (III), $R^3$ is the same as that in the formula (II) above and * denotes a bond.]

In this context, it is preferred that $R^1$ is an aryl group. It is also preferred that the organic compound (A) is an E isomer. It is also preferred that the organic compound (A) is represented by a formula (IV) below.

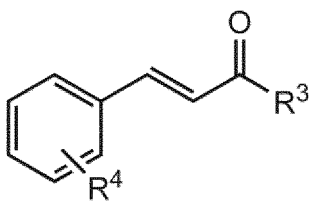

(IV)

[In the formula (IV), $R^3$ is the same as that in the formula (II) above and $R^4$ denotes a hydrogen atom, an alkyl group, an alkoxy group, or a hydroxyl group.]

In this context, it is preferred that $R^4$ is a hydrogen atom. It is also preferred that $R^3$ is a methoxy group or a hydroxyl group. It is also preferred that a molar ratio (Y/A) of the monomer (Y) to the organic compound (A) is from 300 to 30000.

In the production method, it is preferred that the monomer (Y) includes an olefin, a vinyl ester, an acrylic acid, an acrylic ester, an acrylamide-based monomer, a styrenic monomer, an N-vinylamide based monomer, or a dicarboxylic acid-based monomer. In this context, it is more preferred that the production method comprises: a polymerization step of obtaining a vinyl ester-based polymer by controlled radical polymerization of a vinyl ester in the presence of the organic compound (A) and the radical generator (B); and a saponification step of obtaining a vinyl alcohol-based polymer by saponification of the obtained vinyl ester-based polymer.

It is even more preferred that the production method comprises: a polymerization step of obtaining a vinyl ester-based block copolymer by sequentially performing, in the presence of the organic compound (A) and the radical generator (B), controlled radical polymerization of a vinyl ester and controlled radical polymerization of a vinyl ester and a monomer other than vinyl esters; and a saponification step of obtaining a vinyl alcohol-based block copolymer by saponification of the obtained vinyl ester-based block copolymer.

The above problems are also solved by providing a composition for radical polymerization, comprising: an organic compound (A) represented by a formula (I) below; and a radical generator (B), wherein a molar ratio (B/A) of (B) to (A) is from 0.5 to 20.

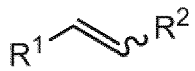

(I)

[In the formula (I), $R^1$ denotes an alkenyl group or an aryl group, $R^2$ denotes a group represented by a formula (II) or (III) below, and $R^1$ and $R^2$ optionally form a ring by coupling with each other.]

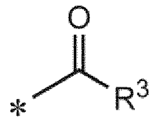

(II)

[In the formula (II), $R^3$ denotes a hydrogen atom, a halogen atom, an alkyl group, an aryl group, an alkenyl group, an alkoxy group, an amino group, a nitro group, a cyano group, an acetyl group, a trifluoromethyl group, or a hydroxyl group, and * denotes a bond.]

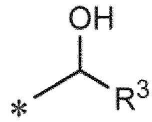

(III)

[In the formula (III), $R^3$ is the same as that in the formula (II) above and * denotes a bond.]

In this context, it is preferred that the composition for radical polymerization further comprises a monomer (Y), wherein a molar ratio (Y/A) of the monomer (Y) to the organic compound (A) is from 300 to 30000.

The above problems are also solved by providing a radical polymerization control agent, comprising an organic compound (A) represented by a formula (I) below.

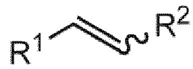

(I)

[In the formula (I), $R^1$ denotes an alkenyl group or an aryl group, $R^2$ denotes a group represented by a formula (II) or (III) below, and $R^1$ and $R^2$ optionally form a ring by coupling with each other.]

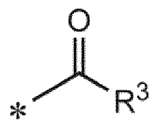

(II)

[In the formula (II), $R^3$ denotes a hydrogen atom, a halogen atom, an alkyl group, an aryl group, an alkenyl group, an alkoxy group, an amino group, a nitro group, a cyano group, an acetyl group, a trifluoromethyl group, or a hydroxyl group, and * denotes a bond.]

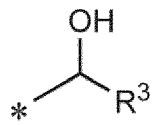

(III)

[In the formula (III), $R^3$ is the same as that in the formula (II) above and * denotes a bond.]

A polymer, comprising an end structure represented by a formula (V) or (VI) below is a preferred embodiment of the present invention.

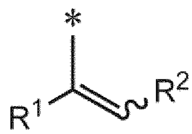

(V)

[In the formula (V), $R^1$ denotes an alkenyl group or an aryl group, $R^2$ denotes a group represented by a formula (II) or (III) below, and $R^1$ and $R^2$ optionally form a ring by coupling with each other. * denotes a bond.]

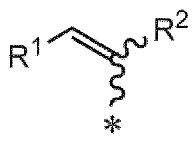

(VI)

[In the formula (VI), $R^1$ and $R^2$ are the same as those in the formula (V) above and * denotes a bond.]

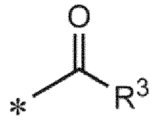

(II)

[In the formula (II), $R^3$ denotes a hydrogen atom, a halogen atom, an alkyl group, an aryl group, an alkenyl group, an alkoxy group, an amino group, a nitro group, a cyano group, an acetyl group, a trifluoromethyl group, or a hydroxyl group, and * denotes a bond.]

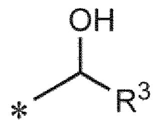

(III)

[In the formula (III), $R^3$ is the same as that in the formula (II) above and * denotes a bond.]

EFFECTS OF THE INVENTION

The organic compound (A) used in the production method of the present invention is highly safe, has high polymerization controllability, and inexpensive. Accordingly, the production method allows synthesis of a highly safe polymer with a high molecular weight while precisely controlling the molecular sequence, the end structure, and the like. In addition, the production method is low in toxicity and environmentally friendly, does not require a step of removing the organic compound (A), and is operated at low costs. The composition for radical polymerization and the radical polymerization control agent of the present invention are preferably used for such a method of producing a polymer.

BRIEF DESCRIPTION OF DRAWINGS

Fig. 1 is a plot of the number-average molecular weight (Mn) against the conversion of vinyl acetate in Example 1.

MODES FOR CARRYING OUT THE INVENTION

The method of producing a polymer of the present invention comprises a polymerization step of obtaining a polymer by controlled radical polymerization of a monomer (Y) in the presence of an organic compound (A) represented by a formula (I) below and a radical generator (B), wherein a molar ratio (B/A) of (B) to (A) is from 0.5 to 20.

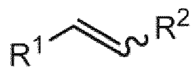

(I)

[In the formula (I), $R^1$ denotes an alkenyl group or an aryl group, $R^2$ denotes a group represented by a formula (II) or (III) below, and $R^1$ and $R^2$ optionally form a ring by coupling with each other.]

In the polymerization step, a polymer is obtained by controlled radical polymerization of the monomer (Y) in the presence of the organic compound (A) represented by the formula (I) above and the radical generator (B). The controlled radical polymerization employed in the production method of the present invention is polymerization reaction where the reaction progresses in an equilibrium state between a propagating radical end (active species) and covalent species (dormant species) formed by the propagating radical end bonded with a control agent. In the production method of the present invention, the organic compound (A) represented by the formula (I) above functions as the control agent. The organic compound (A) is used to highly control the radical polymerization, and it is thus possible to obtain a polymer with a high molecular weight while precisely controlling the molecular sequence, the end structure, and the like. Moreover, the organic compound (A) is inexpensive and highly safe to be industrially used as food additives and perfumes, and

thus does not require a step of removing the organic compound (A). Accordingly, the production method of the present invention is environmentally friendly and also excellent in costs.

In the formula (I) above, $R^1$ denotes an alkenyl group or an aryl group and preferably denotes an aryl group.

The aryl group preferably has a carbon number from 6 to 15. The carbon number is more preferably 13 or less, even more preferably 12 or less, and particularly preferably 10 or less. Examples of the aryl group include a phenyl group, a biphenyl group, a naphthyl group, an anthryl group, an indenyl group, a fluorenyl group, a phenanthryl group, an indacenyl group, a phenalenyl group, an azulenyl group, a pyridyl group, a furil group, and the like, and among them, a phenyl group is preferred. As long as not impairing the effects of the present invention, the aryl group may have a substituent group. Examples of such a substituent group include an alkoxy group, an amino group (including a monoalkylamino group and a dialkylamino group), a carboxyl group, an ester group, a silyl group, a sulfanyl group, a cyano group, a nitro group, a sulfo group, a formyl group, an aryl group, a halogen atom, a hydroxyl group, an ether group, an alkenyl group, and the like, and among them, an alkyl group and an alkoxy group are preferred. Examples of the alkyl group and the alkoxy group include those described later to be used as $R^3$ in the formula (II). From the perspective of more excellent in environment and safety, the aryl group preferably has no substituent group.

The alkenyl group preferably has a carbon number from 2 to 10. The carbon number is more preferably 8 or less. Meanwhile, the carbon number is more preferably 4 or more. The alkenyl group may be a linear or branched alkenyl group or may be a cycloalkenyl group forming a ring. Examples of the alkenyl group include: linear or branched alkenyl groups, such as a vinyl group, an allyl group, a methylvinyl group, a propenyl group, a butenyl group, a pentenyl group, and a hexynyl group; and cycloalkyl groups, such as a cyclopropenyl group, a cyclobutenyl group, a cyclopentenyl group, and a cyclohexynyl group. Among them, the alkenyl group is preferably a cycloalkenyl group and more preferably a cyclohexynyl group. As long as not impairing the effects of the present invention, the alkenyl group may have a substituent group. Examples of such a substituent group include those described above as the substituent group in the aryl group.

In the formula (I) above, $R^2$ denotes a group represented by a formula (II) or (III) below and preferably denotes a group represented by the formula (II) below.

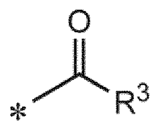

(II)

[In the formula (II), $R^3$ denotes a hydrogen atom, a halogen atom, an alkyl group, an aryl group, an alkenyl group, an alkoxy group, an amino group, a nitro group, a cyano group, an acetyl group, a trifluoromethyl group, or a hydroxyl group, and * denotes a bond.]

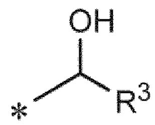

(III)

[In the formula (III), $R^3$ is the same as that in the formula (II) above and * denotes a bond.]

In the formula (II), $R^3$ denotes a hydrogen atom, a halogen atom, an alkyl group, an aryl group, an alkenyl group, an alkoxy group, an amino group (including a monoalkylamino group and a dialkylamino group), a nitro group, a cyano group, an acetyl group, a trifluoromethyl group, or a hydroxyl group, preferably denotes a hydrogen atom, an alkyl group, an aryl group, an alkoxy group, or a hydroxyl group, more preferably denotes an alkyl group, an alkoxy group, or a hydroxyl group, and most preferably denotes an alkoxy group or a hydroxyl group.

The alkyl group preferably has a carbon number from 1 to 10. The carbon number is more preferably 8 or less, even more preferably 6 or less, still more preferably 4 or less, and particularly preferably 2 or less. The alkyl group may be a linear or branched alkyl group or may be a cycloalkyl group forming a ring. Examples of the alkyl group include: linear or branched alkyl groups, such as a methyl group, an ethyl group, an n-propyl group, an isopropyl group, an n-butyl group, an isobutyl group, a sec-butyl group, a tert-butyl group, an n-pentyl group, an isopentyl group, a neopentyl group, a tert-pentyl group, an n-hexyl group, an isohexyl group, a 2-ethylhexyl group, an n-heptyl group, an n-octyl group, an n-nonyl group, and an n-decyl group; and cycloalkyl groups, such as a cyclopropyl group, a cyclobutyl group, a cyclopentyl group, a cyclohexyl group, a cycloheptanyl group, a cyclooctanyl group, a cyclononanyl group, and a cyclodecanyl. Among them, a methyl group, an ethyl group, an n-propyl group, an isopropyl group, an n-butyl group, an isobutyl group, a sec-butyl group, and a tert-butyl group are preferred, and a methyl group is more preferred. As long as not impairing the effects of the present invention, the alkyl group may have a substituent group. Examples of such a substituent group include those described above as the substituent group in the aryl group used as $R^1$. From the perspective of more excellent environmental protection and safety, the alkyl group preferably has no substituent group.

The aryl group preferably has a carbon number from 6 to 15. The carbon number is more preferably 13 or less, even more preferably 12 or less, and particularly preferably 10 or less. Examples of the aryl group include those described above to be used as $R^1$.

The alkoxy group preferably has a carbon number from 1 to 10. The carbon number is more preferably 8 or less, even more preferably 6 or less, still more preferably 4 or less, and particularly preferably 1. Examples of the alkoxy group include a methoxy group, an ethoxy group, a propoxy group, an isopropoxy group, a butoxy group, an isobutoxy group, a sec-butoxy group, a tert-butoxy group, a pentyloxy group, an isopentyloxy group, a neopentyloxy group, a hexyloxy group, a cyclohexyloxy group, a heptyloxy group, an octyloxy group, a nonyloxy group, a decyloxy group, and the like. Among them, a methoxy group, an ethoxy group, a propoxy group, an isopropoxy group, a butoxy group, an isobutoxy group, a sec-butoxy group, and a tert-butoxy group are preferred, and a methoxy group is more preferred. As long as not impairing the effects of the present invention, the alkoxy group may have a substituent group. Examples of such a substituent group include those described above as the substituent group in the aryl group used as $R^1$. From the perspective of more excellent environmental protection and safety, the alkoxy group preferably has no substituent group.

The organic compound (A) represented by the formula (I) above may be either an E isomer or a Z isomer while it is preferred to be the E isomer, that is, to carry out controlled radical polymerization of the monomer (Y) in the presence of the organic compound (A) of the E isomer and the radical generator (B). In this case, the organic compound (A) of the Z isomer may further be present as an optional component. In a case where there is the organic compound (A) of the Z isomer in such a manner, the molar ratio (E / E + Z) of the E isomer to the total of the E isomer and the Z isomer is preferably more than 0.5, more preferably 0.7 or more, and even more preferably 0.8 or more. It is also preferred that the molar ratio (B / E + Z) of the radical generator (B) to the total of the E isomer and the Z isomer is in the same range as the molar ratio (B/A) of (B) to (A) described later. It is also preferred that the molar ratio (Y / E + Z) of the monomer (Y) to the total of the E isomer and the Z isomer is in the same range as the molar ratio (Y/A) described later.

The organic compound (A) represented by the formula (I) above is particularly preferably represented by a formula (IV) below.

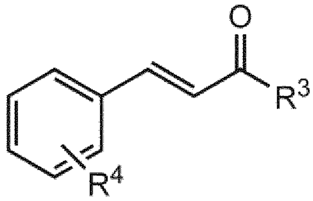

(IV)

[In the formula (IV), $R^3$ is the same as that in the formula (II) above and $R^4$ denotes a hydrogen atom, an alkyl group, an alkoxy group, or a hydroxyl group.]

In the formula (IV) above, $R^4$ denotes a hydrogen atom, an alkyl group, an alkoxy group, or a hydroxyl group. Among them, $R^4$ preferably denotes a hydrogen atom. The bonding site of $R^4$ in the phenyl group is not particularly limited. Examples of the alkyl group and the alkoxy group used as $R^4$ include those described above to be used as $R^3$.

In the formula (I) above, $R^1$ and $R^2$ optionally form a ring by coupling with each other. Examples of such an organic compound (A) forming a ring include those represented by a formula (VII) below.

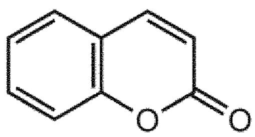

(VII)

The radical generator (B) used in the polymerization step is appropriately selected from conventionally known azo radical generators, peroxide radical generators, redox radical generators, and the like. Examples of such an azo radical generator include 2,2'-azobisisobutyronitrile, 2,2'-azobis(2,4-dimethylvaleronitrile), 2,2'-azobis(4-methoxy-2,4-dimethylvaleronitrile), and the like. Examples of such a peroxide radical generator include: percarbonate compounds, such as diisopropyl peroxydicarbonate, di-2-ethylhexyl peroxydicarbonate, and diethoxyethyl peroxydicarbonate; perester compounds, such as t-butyl peroxyneodecanate, $\alpha$-cumyl peroxyneodecanate, and t-butyl peroxydecanate; acetylcyclohexylsulfonyl peroxide, diisobutyryl peroxide; 2,4,4-trimethylpentyl-2-peroxyphenoxy acetate; and the like. Furthermore, the radical generator may be may be obtained by combining any of the above radical generators with peroxides, such as potassium persulfate, ammonium persulfate, and hydrogen peroxide. Examples of such a redox radical generator include combinations of any of the above peroxide with a reducing agent, such as sodium hydrogen sulfite, sodium hydrogen carbonate, tartaric acid, L-ascorbic acid, and Rongalite.

Examples of the polymerization method include known methods, such as bulk polymerization, solution polymerization, suspension polymerization, and emulsion polymerization. Among all, bulk polymerization in which polymerization is conducted in a nonsolvent system or solution polymerization in which polymerization is conducted in various organic solvents is usually employed. From the perspective of inhibiting reduction of the propagating radical ends due to the chain transfer reaction to the solvent or the dispersion medium, bulk polymerization is preferred that does not use a solvent and a dispersion medium. Meanwhile, solution polymerization is sometimes preferred from the perspective of viscosity control of the reaction liquid, control of the polymerization rate, and the like. Examples of the organic solvent used as the solvent in solution polymerization include: esters, such as methyl acetate and ethyl acetate; aromatic hydrocarbons, such as benzene and toluene; lower alcohols, such as methanol and ethanol; carbonic esters, such as dimethyl carbonate and diethyl carbonate; and the like. Among them, to prevent chain transfer, esters, aromatic hydrocarbons, and dimethyl carbonate are preferably used. In a case where the monomer (Y) contains vinyl acetate, alkali treatment is often carried out in methanol after polymerization, and considering the processability, methanol is also preferably used as the polymerization solvent. The amount of the solvent may be determined considering the target number-average molecular weight of the polymer and the viscosity of the reaction solution. For example, the amount is selected from a mass ratio [solvent/monomer (Y)] ranging from 0.01 to 10.

In the controlled radical polymerization used in the present invention, firstly, the radical generator (B) is decomposed to produce a radical and the radical is bonded with a small number of the monomers (Y) to produce a short-chain polymer having a radical at a propagating end, and the radical is bonded with the organic compound (A), thereby producing a dormant species where the organic compound (A) is covalently bonded with at a polymer end. In a certain period after initiation of the reaction, such a short-chain polymer is produced after another only to be converted to dormant species and thus the molecular weight does not substantially increase. Such a period is referred to as an induction period. After consumption of the organic compound (A), a growth period begins in which the molecular weight increases and most molecular chains in the reaction system have a molecular weight similarly increasing in proportion to polymerization time. The time taken for the step of polymerizing the monomers (Y) in total of the induction period and the growth period is usually from 0.5 to 30 hours.

As described above, in the controlled radical polymerization of the present invention, one polymer chain is theoretically yielded from one molecule of the organic compound (A) to be added. Accordingly, the amount of the organic compound (A) to be added to the reaction liquid is determined considering target number-average molecular weight and conversion. From the perspective of obtaining a polymer with a higher molecular weight, a molar ratio (Y/A) of the monomer (Y) to the organic compound (A) in the polymerization step is preferably 300 or more, more preferably 1000 or more, even more preferably 2000 or more, still more preferably 4000 or more, and particularly preferably 6000 or more. Meanwhile, from the perspective of improving the activation rate of the propagating radical end, the molar ratio (Y/A) is preferably 30000 or less, more preferably 25000 or less, and even more preferably 20000 or less. When the organic compound (A) and the monomer (Y) are added by dividing into a plurality of times, the molar ratio (Y/A) is obtained using the total amount of each.

In the polymerization step, the ratio (B/A) of the radical generator (B) to the organic compound (A) is from 0.5 to 20. The number of moles of the generated radical not more than the number of moles of the organic compound (A) causes the polymerization reaction to progress only by a mechanism in which the organic compound (A) is thermally dissociated from the dormant species, resulting in an extremely low polymerization rate depending on the reaction temperature. Accordingly, considering that the radical generator (B) produces two radicals, in the polymerization step, the organic compound (A) and the radical generator (B) have to be added to the reaction liquid to have the ratio (B/A) of (B) to (A) of 0.5 or more. The amount of active radicals supplied from the radical generator generally depends on the efficiency of the radical generator (initiator efficiency) and thus there are actually deactivated radical generators not used for the formation of dormant species. Accordingly, the molar ratio (B/A) of (B) to (A) is preferably 0.6 or more and more preferably 0.8 or more. Meanwhile, the number of moles of the generated radical excessively more than the number of moles of the organic compound (A) causes an increase in the ratio of uncontrolled radical polymerization and thus reducing the polymerization controllability. The molar ratio (B/A) of (B) to (A) is preferably 15 or less, more preferably 10 or less, and even more preferably 5 or less. When the organic compound (A) and the radical generator (B) are added by dividing into a plurality of times, the molar ratio (B/A) is obtained using the total amount of each.

The monomer contained in the monomer (Y) used in the polymerization step is not particularly limited as long as having radical polymerizability, and preferred examples of the monomer include: olefins, such as ethylene, propylene, and isobutylene; halogenated olefins, such as vinyl chloride, vinyl fluoride, vinylidene chloride, and vinylidene fluoride; vinyl esters, such as vinyl formate, vinyl acetate, vinyl trifluoroacetate, vinyl propionate, vinyl valerate, vinyl butyrate, vinyl isobutyrate, vinyl pivalate, vinyl caprate, vinyl laurate, vinyl stearate, vinyl benzoate, and vinyl versatate; vinylidene cyanide; acrylic acids; methacrylic acids; acrylic esters, such as methyl acrylate, ethyl acrylate, N-propyl acrylate, i-propyl acrylate, N-butyl acrylate, i-butyl acrylate, t-butyl acrylate, 2-ethylhexyl acrylate, dodecyl acrylate, and octadecyl acrylate; methacrylic esters, such as methyl methacrylate, ethyl methacrylate, butyl methacrylate, 2-ethylhexyl methacrylate, dodecyl methacrylate, and 2-hydroxyethyl methacrylate; dimethylaminoethyl acrylate, dimethylaminoethyl

methacrylate, and quaternary compounds thereof; acrylamide-based monomers, such as acrylamide, N-methylolacrylamide, N,N-dimethylacrylamide, and acrylamide-2-methylpropanesulfonic acid and sodium salts thereof; methacrylamide-based monomers, such as methacrylamide, N,N-dimethyl methacrylamide, and trimethyl[3-(methacryloylamino)propyl]aminium chloride; styrenic monomers, such as styrene, $\alpha$-methylstyrene, p-styrenesulfonic acid, and sodium salts and potassium salts thereof; N-vinylamide based monomers, such as N-vinylpyrrolidone, N-vinylformamide, N-vinylacetamide, and N-vinylcaprolactam; allyl-based monomers, such as allyl acetate, allyl chloride, 3,4-diacetoxy-1-butene, 2-methylene-1,3-propanediol, 2-methylene-1,3-propanediol diacetate, allyl alcohol, and dimethylallyl alcohol; vinyl cyanide-based monomers, such as acrylonitrile and methacrylonitrile; vinyl ether-based monomers, such as alkyl (carbon number from 1 to 18) vinyl ethers, hydroxyalkyl vinyl ethers, and alkoxyalkyl vinyl ethers; and dicarboxylic acid-based monomers, such as maleic acid, monomethyl maleate, dimethyl maleate, maleic anhydride, itaconic acid, monomethyl itaconate, dimethyl itaconate, and itaconic anhydride. Among them, the monomer is more preferably an olefin, a vinyl ester, an acrylic acid, an acrylic ester, an acrylamide-based monomer, a styrenic monomer, an N-vinylamide based monomer, or a dicarboxylic acid-based monomer, even more preferably a vinyl ester, styrene, or N-vinylpyrrolydone, particularly preferably a vinyl ester or N-vinylpyrrolydone, and most preferably a vinyl ester. The monomer (Y) may contain one of these monomers or may contain two or more of them. The monomer (Y) preferably contains one of these monomers as a main component. In this context, the main component means a monomer with the largest content among the monomers contained in the monomer (Y). The content of the monomer as the main component in the monomer (Y) is preferably 30 mol% or more, more preferably 50 mol% or more, even more preferably 70 mol% or more, and particularly preferably 80 mol% or more.

The vinyl ester is preferably vinyl acetate from the perspective of economic efficiency. The acrylic ester is preferably methyl acrylate from the perspective of economic efficiency.

In the production method of the present invention, as the monomer (Y), a homopolymer may be obtained using one kind of the monomers or a copolymer may be obtained using two or more kinds of the monomers. The copolymer may be either a random copolymer or a block copolymer. The polymer to be obtained by the production method of the present invention may be either branched or linear while the polymer is preferably linear to take advantage of the high polymerization controllability by the organic compound (A).

The method of mixing the organic compound (A), the radical generator (B), and the monomer (Y) is not particularly limited as long as the method is capable of producing the dormant species and controlling the increase in the molecular weight of the polymer. Examples of the method may include: a method comprising adding the organic compound (A) and the radical generator (B) to the monomer (Y); a method comprising mixing the organic compound (A) and the radical generator (B), followed by mixing the mixture thus obtained with the monomer (Y); a method comprising mixing the organic compound (A), the radical generator (B), and the monomer (Y) at one time; a method comprising mixing the organic compound (A) and the monomer (Y), followed by mixing the mixture thus obtained with the radical generator (B); and the like. The organic compound (A), the radical generator (B), and the monomer (Y) may be mixed by dividing them. Examples of this method may include: a method comprising mixing the organic compound (A) and the radical generator (B) with part of the monomer (Y), thereby producing a dormant species where the organic compound (A) is covalently bonded with a short-chain polymer end, followed by mixing the dormant species with the remaining monomer (Y) to increase the molecular weight; and the like. The dormant species may be isolated as a macroinitiator and then mixed with the remaining monomer (Y) to increase the molecular weight.

The polymerization temperature is preferably, for example, from 0°C to 80°C. A polymerization temperature of less than 0°C causes an insufficient polymerization rate and thus has a risk of reducing the productivity. In this regard, the polymerization temperature is more preferably 10°C or more and even more preferably 20°C or more. Meanwhile, a polymerization temperature of more than 80°C has a risk of reducing the controllability of radical polymerization. In this regard, the polymerization temperature is more preferably 70°C or less and even more preferably 65°C or less.

From the perspective of further improving the polymerization controllability, when the conversion of the monomer (Y) is 5.0%, a ratio (Mn/theoretical Mn) of the number-average molecular weight (Mn) (measurement value) to the theoretical number-average molecular weight (theoretical Mn) of the polymer is preferably 10.0 or less, more preferably 8.0 or less, even more preferably 6.0 or less, still more preferably 5.0 or less, particularly preferably 4.5 or less, and most preferably 4.0 or less. Meanwhile, from the perspective of productivity, the ratio (Mn/theoretical Mn) of the polymer when the conversion of the monomer (Y) is 5.0% is preferably 0.5 or more and more preferably 0.8 or more. The conversion of the monomer (Y) at the termination of the polymerization is not particularly limited and may be adjusted in accordance with the amounts of the organic compound (A) and the monomer (Y) to be added, the target number-average molecular weight, and the like while the conversion is usually from 3% to 50%. The conversion is preferably 10% or more and more preferably 20% or more. The number-average molecular weight (Mn) (measurement value) of the polymer at the conversion of 5.0% is obtained as follows. The number-average molecular weight (Mn) at a plurality of conversions is obtained by performing GPC (gel permeation chromatography) measurement of the polymer a plurality of times between initiation and termination of the polymerization (provided that the GPC measurement is performed at least once while the conversion is 1.0% or more and less than 5.2%). The number-average molecular weight (Mn) is

then plotted against each conversion, and from a straight line through two points near the conversion of 5.0%, the number-average molecular weight (Mn) of the polymer at the conversion of 5.0% is obtained. It should be noted that at least one of the two points to be used is a point of a conversion of 1.0% or more and less than 5.2%. Specifically, the method described later in Examples is employed. The theoretical number-average molecular weight (theoretical Mn) of the polymer is obtained from the equation below.

$$\text{Theoretical Mn} = \text{Molar Ratio (Y/A) of Monomer (Y) to Organic Compound (A)} \times \text{Average Molecular Weight [g/mol] of Monomer (Y)} \times (\text{Conversion [\%]}/100)$$

From the perspective of taking advantage of the high polymerization controllability of the production method of the present invention, a block copolymer is preferably produced in the polymerization step. Specifically, in the polymerization step, it is preferred to obtain a block copolymer with a polymer block (a) containing a monomer (Ya) unit and a polymer block (b) containing a monomer (Yb) unit by sequentially performing, in the presence of the organic compound (A) and the radical generator (B), controlled radical polymerization of a monomer (Ya) and controlled polymerization of a monomer (Yb) other than the monomer (Ya) and it is more preferred to obtain a block copolymer with a polymer block (a) containing a monomer (Ya) unit and a polymer block (ab) containing a monomer (Ya) unit and a monomer (Yb) unit by sequentially performing, in the presence of the organic compound (A) and the radical generator (B), controlled polymerization of the monomer (Ya) and controlled polymerization of the monomer (Ya) and the monomer (Yb). The polymerization step is described below.

In the polymerization step, at first, the monomer (Ya), a monomer (Yc) other than the monomer (Ya) and the monomer (Yb) as needed, the organic compound (A), and the radical generator (B) are mixed by the above method to start polymerization of the monomer (Ya). Then, after the number-average molecular weight of the polymer block (a) containing the monomer (Ya) has reached a target value, the monomer (Yb) is polymerized to synthesize the polymer block (b) containing the monomer (Yb) unit. In this procedure, the monomer (Yb) may be polymerized by removing the residual monomer (Ya) and then adding the monomer (Yb) to the reaction liquid to synthesize the polymer block (b) containing the monomer (Yb) unit. Also in this procedure, the monomer (Yb) may be added to the reaction liquid without removing the monomer (Ya) to copolymerize the residual monomer (Ya) and the monomer (Yb), thereby synthesizing a copolymer block (ab) containing the monomer (Ya) unit and the monomer (Yb) unit. When the monomer (Yb) is added, an additional monomer (Ya) and another monomer (Yc) may be added as needed.

Still in this procedure, at first, the monomer (Ya), the monomer (Yb), the other monomer (Yc) as needed, the organic compound (A), and the radical generator (B) may be mixed to synthesize the polymer block (ab), and after complete consumption of the monomer (Yb) or after removal of the residual monomer (Yb), the monomer (Ya) is polymerized to synthesize the polymer block (a).

In such a manner, the polymer block (a) may be synthesized with the polymer block (b) or the copolymer block (ab) to obtain a binary block copolymer, or the monomer (Ya), the monomer (Yb), or the other monomer (Yc) may further be repeatedly polymerized to obtain a ternary or more multicomponent block copolymer. From the perspective of costs, the block copolymer is preferably a binary block copolymer, a ternary block copolymer, or a quaternary block copolymer, more preferably a binary block copolymer or a ternary block copolymer, and even more preferably a binary block copolymer. The bonding form of each block is preferably linear.

From the perspective of readily obtaining the performance derived from each block, a ratio (Mn of block / Mn of block copolymer) of the number-average molecular weight (Mn) of each block to the number-average molecular weight (Mn) of the block copolymer is preferably from 0.01 to 0.99, respectively. The ratio (Mn of block / Mn of block copolymer) is more preferably 0.05 or more and even more preferably 0.1 or more. Meanwhile, the ratio (Mn of block / Mn of block copolymer) is more preferably 0.95 or less and even more preferably 0.9 or less.

The content of the monomer (Ya) units in the polymer block (a) is preferably 50 mol% or more, more preferably 70 mol% or more, even more preferably 80 mol% or more, and particularly preferably 90 mol% or more. The content of the monomer (Yb) units in the polymer block (a) is preferably less than 10 mol%, more preferably less than 5 mol%, and even more preferably less than 1 mol%. The content of the monomer (Yb) units in the polymer block (b) is preferably 50 mol% or more, more preferably 70 mol% or more, even more preferably 80 mol% or more, and particularly preferably 90 mol% or more. The content of the monomer (Ya) units in the polymer block (b) is preferably less than 10 mol%, more preferably less than 5 mol%, and even more preferably less than 1 mol%. The content of the monomer (Ya) units in the polymer block (ab) is preferably from 1 to 99 mol%, more preferably from 5 to 99 mol%, and even more preferably from 10 to 90 mol%. The content of the monomer (Yb) units in the polymer block (ab) is preferably from 1 to 99 mol%, more preferably from 5 to 99 mol%, and even more preferably from 10 to 90 mol%.

The monomer (Ya), the monomer (Yb), and the other monomer (Yc) are not particularly limited and may use respectively appropriate combinations of those described above as the monomer (Y). Among them, it is preferred to use the vinyl ester as one of the monomer (Ya) and the monomer (Yb). The other monomer used together with the vinyl ester is not particularly limited as long as the monomer is other than vinyl esters, and the other monomer is preferably the acrylic ester, the olefin, or the acrylic acid described above.

Among them, in the polymerization step, it is particularly preferred to sequentially perform, in the presence of the organic compound (A) and the radical generator (B), controlled radical polymerization of a vinyl ester and controlled radical polymerization of a vinyl ester and a monomer other than vinyl esters, thereby obtaining a vinyl ester-based block copolymer with a vinyl ester polymer block and a polymer block containing a vinyl ester unit and a unit derived from the monomer other than vinyl esters.

When the number-average molecular weight of the polymer or the conversion of the monomer (Y) reaches a target value in the polymerization step, it is preferred to perform a termination step of terminating the polymerization reaction by adding a polymerization terminator. Examples of the polymerization terminator include: 1,1-diphenylethylene; aromatic hydroxy compounds, such as p-methoxyphenol, hydroquinone, cresol, t-butylcatechol, and p-nitrosophenol; quinone compounds, such as benzoquinone and naphthoquinone; conjugated carboxylic acids, such as muconic acid and sorbic acid; thioethers, such as phenothiazine, distearyl thiodipropionate, and dilauryl thiodipropionate; aromatic amines, such as p-phenylenediamine and N-nitrosodiphenylamine; nitroxides, such as 2,2,6,6-tetramethylpiperidine 1-oxyl and 4-hydroxy-2,2,6,6-tetramethylpiperidine 1-oxyl; transition metal salts, such as copper acetate, copper dithiocarbamate, and manganese acetate; and the like. Among them, 1,1-diphenylethylene, sorbic acid, and benzoquinone are preferred, and 1,1-diphenylethylene is more preferred.

The number of moles of the polymerization terminator to be added is preferably from 1 to 100 mol per mole of the organic compound (A) added. An excessively small number of moles of the polymerization terminator causes a risk of not sufficiently trapping radicals at polymer ends to deteriorate color tone of the polymer to be obtained. Meanwhile, an excessively large number of moles of the polymerization terminator causes a risk of increasing production costs.

The temperature of the reaction liquid in the terminating step may be a temperature at which the polymerization terminator is capable of reacting with a radical at the end of the polymer, and is preferably from 0°C to 80°C. The time taken for the terminating step is usually from 1 minute to 5 hours.

Although a removal step may be performed after the polymerization step to remove the organic compound (A) and the like contained in the polymer thus obtained, it is preferred not to perform such a removal step from the perspective of excellent balance among environmental protection, safety, and costs. Since the organic compound (A) is highly safe, the polymer to be obtained is highly safe even without performing the removal step.

As described above, the monomer (Y) used in the polymerization step preferably contains a vinyl ester. That is, in the polymerization step, it is preferred to obtain a vinyl ester-based block copolymer by performing, in the presence of the organic compound (A) and the radical generator (B), controlled radical polymerization of a vinyl ester. Examples of the vinyl ester-based polymer include a homopolymer of a vinyl ester, a random copolymer containing a vinyl ester unit and a unit derived from a monomer other than vinyl esters, a vinyl ester-based block copolymer with the polymer block (a) containing a vinyl ester unit and the polymer block (b) containing a unit derived from a monomer other than vinyl esters, and the like. The vinyl ester-based polymer thus obtained is preferably used for various applications.

It is also preferred to perform a saponification step of obtaining a vinyl alcohol-based polymer by saponifying the vinyl ester-based polymer and converting the vinyl ester unit to a vinyl alcohol unit.

In the saponification step, for example, it is to obtain a vinyl alcohol-based polymer by saponifying the vinyl ester-based polymer in a state of being dissolved in an alcohol. When the vinyl ester-based polymer contains an acrylic ester unit, it is possible to convert the acrylic ester unit to an acrylic acid unit by adjusting the saponification conditions. In addition, the acrylic ester unit or the acrylic acid unit may form a lactone ring with an adjacent vinyl alcohol unit.

Examples of the alcohol to be used in the saponification reaction include lower alcohols, such as methanol and ethanol, and methanol is particularly preferably used. The alcohol may be a hydrous alcohol or a dehydrated alcohol. The alcohol to be used in the saponification reaction may contain a solvent, such as acetone, an ester such as methyl acetate or ethyl acetate, or toluene. Examples of the catalyst to be used in the saponification reaction include: hydroxides of alkali metals, such as potassium hydroxide and sodium hydroxide; alkaline catalysts, such as sodium methylate; and acid catalysts, such as mineral acids. An appropriate range of the temperature of the saponification reaction is, for example, from 20°C to 80°C. When a gelatinous product is precipitated with progress of the saponification reaction, the product is ground at that timing and washed, followed by being dried to obtain a vinyl alcohol-based polymer.

The degree of saponification of the vinyl alcohol-based polymer may be adjusted in accordance with the application and is not particularly limited while it is usually from 50 to 99.99 mol%. In the present invention, the degree of saponification refers to the ratio (mol%) of the total number of moles of the vinyl alcohol units (including the units derived from the vinyl alcohol monomer forming a lactone ring) to the total number of moles of the vinyl ester units and the vinyl alcohol units (including the units derived from the vinyl alcohol monomer forming a lactone ring) in the vinyl alcohol-based polymer. The degree of saponification can be determined by $^1$H-NMR measurement of the vinyl alcohol-based

polymer.

The total amount of the vinyl ester units and the vinyl alcohol units in the vinyl alcohol-based polymer is preferably 50 mol% or more, more preferably 70 mol% or more, and even more preferably 80 mol% or more.

When the vinyl ester-based block copolymer with the polymer block (a) containing a vinyl ester unit and the polymer block (b) containing a unit derived from a monomer other than vinyl esters is saponified, a vinyl alcohol-based block copolymer with a polymer block (a') containing a vinyl alcohol unit and a polymer block (b') containing a unit derived from a monomer other than vinyl esters is obtained. When the vinyl ester-based block copolymer with the polymer block (a) containing a vinyl ester unit and the copolymer block (ab) containing a vinyl ester unit and a unit derived from a monomer other than vinyl esters is saponified, a vinyl alcohol-based block copolymer with the vinyl alcohol-based polymer block (a') and a copolymer block (ab') containing a vinyl alcohol unit and a unit derived from a monomer other than vinyl esters is obtained.

The number-average molecular weight (Mn) of the polymer to be obtained by the production method of the present invention is preferably, but not particularly limited to, 1,000 or more. The production method of the present invention allows synthesis of a polymer with a high molecular weight while precisely controlling the molecular sequence, the end structure, and the like. Accordingly, this production method is preferably used for producing a polymer with a high number-average molecular weight (Mn). The polymer more preferably has a number-average molecular weight (Mn) of 2,000 or more, even more preferably 4,000 or more, still more preferably 10,000 or more, particularly preferably 20,000 or more, and most preferably 40,000 or more. Meanwhile, from the perspective of handleability, the polymer preferably has a number-average molecular weight (Mn) of 1,000,000 or less, more preferably 500,000 or less, and even more preferably 300,000 or less. The number-average molecular weight (Mn) and the molecular weight distribution (Mw/Mn) are values determined by measurement using polymethylmethacrylate as a reference material by GPC. The column may be appropriately selected considering the solubility of the polymer in the solvent and the like. A tetrahydrofuran-based column, an HFIP-based column, or the like is preferably used. The specific measurement method is described in Examples.

The polymer obtained by the production method of the present invention preferably has a molecular weight distribution (Mw/Mn), but not particularly limited to, from 1.00 to 3.5. Polymerization by controlled radical polymerization allows production of the polymer having a narrow molecular weight distribution. The molecular weight distribution (Mw/Mn) is more preferably 3.4 or less, even more preferably 3.3 or less, and particularly preferably 3.2 or less.

In the production method of the present invention, use of the organic compound (A) allows highly controlled radical polymerization, and it is thus possible to obtain a polymer with a high molecular weight while precisely controlling the molecular sequence, the end structure, and the like. Moreover, the organic compound (A) is inexpensive and highly safe to be industrially used as food additives and perfumes, and thus no step of removing the organic compound (A) is required. Accordingly, the production method of the present invention is environmentally friendly and also excellent in costs. The polymer to be obtained is, taking advantage of the properties, preferably used in sanitary, commodity, construction and civil engineering, industrial, agricultural, medical, food applications and the like.

A composition for radical polymerization is a preferred embodiment of the present invention that comprises: the organic compound (A) represented by a formula (I) below; and the radical generator (B), wherein a molar ratio (B/A) of (B) to (A) is from 0.5 to 20. Use of the composition allows radical polymerization of the monomer (Y) while highly controlling the radical polymerization. The composition for radical polymerization is also highly safe. Accordingly, this composition is preferably used for radical polymerization of various monomers including the method of producing a polymer described above. Examples of the organic compound (A), the radical generator (B), and the monomer (Y) used for the composition for radical polymerization include those described above to be used in the method of producing a polymer.

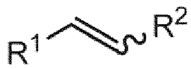 (I)

[In the formula (I), $R^1$ denotes an alkenyl group or an aryl group, $R^2$ denotes a group represented by a formula (II) or (III) below, and $R^1$ and $R^2$ optionally form a ring by coupling with each other.]

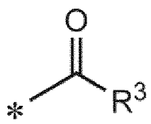 (II)

[In the formula (II), $R^3$ denotes a hydrogen atom, a halogen atom, an alkyl group, an aryl group, an alkenyl group, an alkoxy group, an amino group, a nitro group, a cyano group, an acetyl group, a trifluoromethyl group, or a hydroxyl group,

and * denotes a bond.]

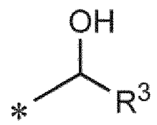

(III)

[In the formula (III), $R^3$ is the same as that in the formula (II) above and * denotes a bond.]

It is preferred that the composition for radical polymerization further comprises a monomer (Y). In this situation, it is preferred that a molar ratio (Y/A) of the monomer (Y) to the organic compound (A) is from 300 to 30000.

A radical polymerization control agent, comprising the organic compound (A) represented by a formula (I) below is another preferred embodiment of the present invention. Examples of the organic compound (A) used as the radical polymerization control agent include those described above to be used in the method of producing a polymer. In the radical polymerization, examples of the radical generator (B) and the monomer (Y) used together with the radical polymerization control agent include those described above to be used in the method of producing a polymer.

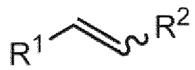

(I)

[In the formula (I), $R^1$ denotes an alkenyl group or an aryl group, $R^2$ denotes a group represented by a formula (II) or (III) below, and $R^1$ and $R^2$ optionally form a ring by coupling with each other.]

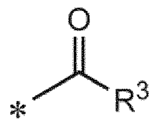

(II)

[In the formula (II), $R^3$ denotes a hydrogen atom, a halogen atom, an alkyl group, an aryl group, an alkenyl group, an alkoxy group, an amino group, a nitro group, a cyano group, an acetyl group, a trifluoromethyl group, or a hydroxyl group, and * denotes a bond.]

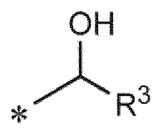

(III)

[In the formula (III), $R^3$ is the same as that in the formula (II) above and * denotes a bond.]

A polymer, comprising an end structure represented by a formula (V) or (VI) below is a preferred embodiment of the present invention.

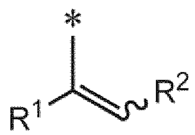

(V)

[In the formula (V), $R^1$ denotes an alkenyl group or an aryl group, $R^2$ denotes a group represented by a formula (II) or (III) below, and $R^1$ and $R^2$ optionally form a ring by coupling with each other. * denotes a bond.]

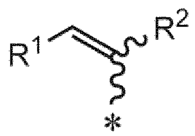

(VI)

[In the formula (VI), $R^1$ and $R^2$ are the same as those in the formula (V) above and * denotes a bond.]

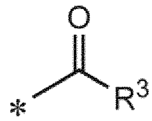

(II)

[In the formula (II), $R^3$ denotes a hydrogen atom, a halogen atom, an alkyl group, an aryl group, an alkenyl group, an alkoxy group, an amino group, a nitro group, a cyano group, an acetyl group, a trifluoromethyl group, or a hydroxyl group, and * denotes a bond.]

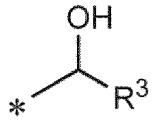

(III)

[In the formula (III), $R^3$ is the same as that in the formula (II) above and * denotes a bond.]

EXAMPLES

The present invention is more specifically described below with reference to Examples.

[Organic Compound (A)]

- trans-cinnamic acid
- methyl cinnamate
- trans-benzalacetone
- cinnamic alcohol
- 4-phenyl-2-butanone
- β-ionone
- coumarin

[Radical Generator (B)]

- [2,2'-azobis(4-methoxy-2,4-dimethylvaleronitrile)] (V-70)

[Monomer]

- vinyl acetate (VAc)
- N-vinylpyrrolydone (VP)
- methyl acrylate (MA)
- ethylene (Et)
- styrene (Sty)
- N,N-dimethylacrylamide (DEAA)
- maleic anhydride (MAn)

[Polymerization Inhibitor]

- 1,1-diphenylethylene (1,1-DPEt)

[Number-Average Molecular Weight (Mn)]

The number-average molecular weight (Mn) and the molecular weight distribution (Mw/Mn) of the polymer were measured using a gel permeation chromatograph manufactured by Shimadzu Corp. Either one of the following measurement conditions was employed.

Condition 1

Column: tetrahydrofuran-based column "KF-806M" manufactured by Showa Denko K.K.
Reference material: polymethylmethacrylate
Solvent and mobile phase: tetrahydrofuran (THF)
Flow rate: 1.0 mL/min.
Temperature: 40°C
Sample solution concentration: 0.2 mass% (filtered through a filter with an opening diameter of 0.45 μm)
Injection amount: 100 μL
Detector: RI

Condition 2

Column: two HFIP columns "GMHHR-H(S)" manufactured by Tosoh Corp., serial connection
Reference material: polymethylmethacrylate
Solvent and mobile phase: sodium trifluoroacetate-HFIP solution (concentration of 20 mM)
Flow rate: 0.2 mL/min.
Temperature: 40°C
Sample solution concentration: 0.1 wt% (filtered through a filter with an opening diameter of 0.45 μm)
Injected amount: 10 μL
Detector: RI

[Theoretical Number-Average Molecular Weight (Theoretical Mn)]

The theoretical number-average molecular weight (theoretical Mn) at a predetermined conversion was obtained from the equation below.

$$\text{Theoretical Mn} = \text{Molar Ratio (Y/A) of Monomer (Y) to Organic Compound (A)} \times \text{Average Molecular Weight [g/mol] of Monomer (Y)} \times (\text{Conversion [\%]}/100)$$

[Polymerization Controllability]

The controllability was determined to be excellent when the ratio (Mn/theoretical Mn) of the number-average molecular weight (Mn) (measurement value) to the theoretical number-average molecular weight (theoretical Mn) of the polymer at the conversion of the monomer (Y) of 5.0% is 10.0 or less and also the Mn increased with an increase in the conversion. The number-average molecular weight (Mn) (measurement value) of the polymer at the conversion of 5.0% was obtained as follows. The number-average molecular weight (Mn) at a plurality of conversions was obtained by performing GPC (gel permeation chromatography) measurement of the polymer in the reaction liquid a plurality of times between initiation and termination of the polymerization (provided that the GPC measurement is performed at least once while the conversion is 1.0% or more and less than 5.2%). Fig. 1 is a plot of the number-average molecular weight (Mn) against the conversion in Example 1. As illustrated in Fig. 1, the number-average molecular weight (Mn) (abscissa, linear scale) was plotted against each conversion (abscissa, linear scale), and from a straight line through two points near the conversion of 5.0%, the number-average molecular weight (Mn) of the polymer at the conversion of 5.0% was then obtained. It should be noted that at least one of the two points to be used was a point of a conversion of 1.0% or more

and less than 5.2%.

[Amount of Et Dissolved in VAc]

The amount of Et dissolved in VAc was calculated as follows. Table 1 in Nature Chemistry volume 6, pages 179-187 (2014) indicates that respective Et mole fractions contained in a VAc/Et random copolymer obtained by copolymerizing VAc and Et under the conditions of Et pressure of 10, 25, and 50 [bar] were 0.13, 0.33, and 0.54. Regarding four points including them and the point of origin (Et component of 0 at the Et pressure of 0), the correlation of the Et mole fraction (Fet) contained in the obtained copolymer is plotted against the Et pressure (E) [bar] and an approximation curve obtained by the least squares method is represented by the equation below.

$$Fet = 0.0108E + 0.0208$$

The molar ratio (F = Fvac/Fet) of VAc units to Et units contained in the VAc/Et copolymer is represented by the equation below.

$$F = (1 - Fet)/Fet$$

Polymer Handbook fourth edition, page II/273 describes that the copolymerization reactivity ratios of VAc and Et are r(VAc) = 1.03 and r(Et) = 0.88. Since the Mayo-Lewis formula generally holds for the molar ratio of a monomer [molar ratio (D = Dvac/Det) of VAc to Et], the molar ratio of a monomer unit contained in the VAc/Et copolymer thus obtained [molar ratio (F = Fvac/Fet) of VAc units to Et units], and the copolymerization reactivity ratios of the monomers, (D) is represented by the equation below.

$$D = (F - 1 + ((1 - F)^2 + 3.6256F)^0.5)/2.06$$

The total amount (Yvac+et) (mol) of VAc and Et in the copolymerization of VAc and Et is obtained from the equation below using the amount (Yvac) (mol) and the molar ratio D of VAc in the copolymerization.

$$(Yvac+et) = (Yvac) + (Yvac)/D$$

[Content (U) of Methyl Acrylate Monomer Units in Vinyl Acetate-Based Block Copolymer]

The content (U) (mol%) of the methyl acrylate monomer units in the vinyl acetate-based block copolymer was determined by the following method. $^1$H-NMR measurement of the vinyl acetate-based block copolymer was performed. The content (U) (mol%) of the acrylic ester monomer units in the vinyl acetate-based block copolymer was calculated by the equation below, where T was the integral value (4.8 ppm) of the peak derived from the methine proton ($-CH_2CH(OCOCH_3)-$) of the vinyl acetate monomer unit, and S was the integral value (3.6 ppm) of the peak derived from the side chain protons ($-CH_2CH(COOCH_3)-$) of the methyl acrylate monomer unit. In addition, using the content (U) and the number-average molecular weight (Mn) of each polymer block, the content of the MA units in the copolymer block containing the VAc units and the MA units was obtained.

$$(U)\ (mol\%) = (S/3)/(S/ 3 + T) \times 100$$

[Content (R) of Et Monomer Units in Vinyl Acetate-Based Block Copolymer]

The content (R) (mol%) of the Et monomer units in the vinyl acetate-based block copolymer was determined by the following method. $^1$H-NMR measurement of the vinyl acetate-based block copolymer was performed. The content (R) (mol%) of the Et units in the vinyl acetate-based block copolymer was calculated by the equation below, where T was the integral value (4.8 ppm) of the peak derived from the methine proton ($-CH_2C\underline{H}(OCOCH_3)-$) of the vinyl acetate monomer unit, and Q was the integral value (1.0 -1.8 ppm) of the peak derived from the methylene proton ($-\underline{CH_2}CH(OCOCH_3)-$) of the vinyl acetate monomer unit and the main chain proton ($-\underline{CH_2CH_2}-$) of the Et units. In addition, using the content (R) and the number-average molecular weight (Mn) of each polymer block, the content of the Et units

in the copolymer block containing the VAc units and the Et units was obtained.

$$(R)\ (mol\%) = (Q - 2T)/4/((Q - 2T)/4 + T) \times 100$$

[Content (O) of Acrylic Acid Monomer Units in Vinyl Acetate-Based Block Copolymer]

The content (O) (mol%) of the acrylic acid monomer units in the vinyl acetate-based block copolymer was determined by the following method. $^1$H-NMR measurement of the vinyl acetate-based block copolymer was performed. The content (O) (mol%) of the acrylic acid monomer units in the vinyl acetate-based block copolymer was calculated by the equation below, where T was the integral value (4.8 ppm) of the peak derived from the methine proton ($-CH_2C\underline{H}(OCOCH_3)-$) of the vinyl acetate monomer unit, and P was the integral value (12.2 ppm) of the peak derived from the side chain protons ($-CH_2CH(COO\underline{H})-$) of the acrylic acid monomer unit. In addition, using the content (O) and the number-average molecular weight (Mn) of each polymer block, the content of the AA units in the copolymer block containing the VAc units and the AA units was obtained.

$$(O)\ (mol\%) = P/(P + T) \times 100$$

[Content (M) of N,N-Dimethylacrylamide Monomer Units in Vinyl Acetate-Based Block Copolymer]

The content (M) (mol%) of the N,N-dimethylacrylamide units in the vinyl acetate-based block copolymer was determined by the following method. $^1$H-NMR measurement of the vinyl acetate-based block copolymer was performed. The content (M) (mol%) of the N,N-dimethylacrylamide monomer units in the vinyl acetate-based block copolymer was calculated by the equation below, where T was the integral value (4.8 ppm) of the peak derived from the methine proton ($-CH_2C\underline{H}(OCOCH_3)-$) of the vinyl acetate monomer unit, and N was the integral value (3.0 ppm) of the peak derived from the side chain protons ($-CH_2CH(CONH(C\underline{H}_3)_2-$) of the N,N-dimethylacrylamide monomer unit. In addition, using the content (M) and the number-average molecular weight (Mn) of each polymer block, the content of the DMAA units in the copolymer block containing the VAc units and the DMAA units was obtained.

$$(M)\ (mol\%) = (N/6)/((N/6) + T) \times 100$$

[Content (J) of Maleic Anhydride Monomer Units in Vinyl Acetate-Based Block Copolymer]

The content (J) (mol%) of the maleic anhydride monomer units in the vinyl acetate-based block copolymer was determined by the following method. $^1$H-NMR measurement of the vinyl acetate-based block copolymer was performed. The content (J) (mol%) of the maleic anhydride monomer units in the vinyl acetate-based block copolymer was calculated by the equation below, where K was the integral value (5.1 ppm) of the peak derived from the methine proton ($-CH_2C\underline{H}(OCOCH_3)-$) of the vinyl acetate monomer unit, and L was the integral value (3.0 ppm) of the peak derived from the main chain proton ($-C\underline{H}C\underline{H}(CO_2CO)-$) of the maleic anhydride monomer units. In addition, using the content (J) and the number-average molecular weight (Mn) of each polymer block, the content of the MAn units in the copolymer block containing the VAc units and the MAn units was obtained.

$$(J)\ (mol\%) = (L/2)/((L/2) + K) \times 100$$

[Content (W) of End Structure Units Represented by Formula (V) or (VI) in Polymer]

The content (W) (mol%) of the end structure units represented by the formula (V) or (VI) in the polymer was calculated as follows. As an example, the content of methyl cinnamate added to a polyvinyl acetate end was determined. The polyvinyl acetate was repeatedly dissolved in methanol and reprecipitated in hexane to remove methyl cinnamate not added to a polyvinyl acetate end, and polyvinyl acetate thus collected was dried in a vacuum dryer at 40°C for 24 hours, followed by $^1$H-NMR measurement of the polyvinyl acetate thus obtained. The integral value (4.8 ppm) H of the peak derived from the methine proton ($-CH_2C\underline{H}(OCOCH_3)-$) of the vinyl acetate monomer unit and the integral value G of all peaks detected in the range from 7.1 to 7.5 ppm derived from the aromatic ring of the methyl cinnamate were calculated. In calculation of the integral value from 7.1 to 7.5 ppm, when a baseline was tilted, the area of each peak was calculated considering the tilt. Using the integral value H and a value obtained by dividing the integral value G by

the number of hydrogen atoms bonded with the aromatic ring (G / number of hydrogen atoms bonded with aromatic ring), the content (W) was obtained from [(G / number of hydrogen atoms bonded with aromatic ring)/H].

$$(W)\ (\text{mol\%}) = (G/5)/H \times 100$$

[Molar Ratio (F) of Content of End Structures Represented by Formula (V) or (VI) to Number of Chains in Polymer]

The molar ratio (F) of the content of the end structures represented by the formula (V) or (VI) to the number of chains in the polymer was calculated as follows. Using the content (W) of the end structure units represented by the formula (V) or (VI) and the molecular weight of the monomer unit in the polymer, the molar ratio (F) was obtained from [W/(Mn/ molecular weight of monomer unit $\times$100)]. The molar ratio (F) of 1 indicates that the structural unit represented by the formula (V) or (VI) is introduced into one end of all polymer chains, and this ratio closer to 1 is considered to have better controllability.

$$(F) = W/(Mn/86 \times 100)$$

Example 1

Polymerization Step

To a reactor provided with a stirrer, a reflux condenser tube, and an inlet port for a radical generator, 900 parts by mass of VAc was added and then nitrogen was introduced into the reactor for inert gas purge. To a preparation container, 100 parts by mass of VAc, 0.22 parts by mass of cinnamic acid as the organic compound (A), and 0.45 parts by mass of V-70 as the radical generator (B) were added and dissolved, and then nitrogen was introduced for inert gas purge. The solution in the preparation container was added to the reactor, and then heated to have the temperature inside the reactor at 50°C and stirred. Sampling was appropriately performed and the progress of the polymerization was checked from the solid concentration. At the conversion of VAc of 3.9 mass%, the number-average molecular weight (Mn) was 86,800, the theoretical number-average molecular weight (theoretical Mn) was 26,800, and the ratio (Mn/theoretical Mn) was 3.2. At the conversion of VAc of 9.5 mass%, the number-average molecular weight (Mn) was 132,800, the theoretical number-average molecular weight (theoretical Mn) was 65,300, and the ratio (Mn/theoretical Mn) was 2.0. At the conversion of VAc of 12.7 mass%, the number-average molecular weight (Mn) was 166,900, the theoretical number-average molecular weight (theoretical Mn) was 87,100, and the ratio (Mn/theoretical Mn) was 1.9. When the conversion of VAc reached 22 mass%, 1.31 parts by mass of 1,1-DPEt was added as a polymerization terminator. At this point, the number-average molecular weight (Mn) was 226,400, the theoretical number-average molecular weight (theoretical Mn) was 149,300, the ratio (Mn/theoretical Mn) was 1.5, and the molecular weight distribution (Mw/Mn) was 2.57. Unreacted VAc was distilled off under reduced pressure from the solution, and polyvinyl acetate was collected and dried in a vacuum dryer at 40°C for 24 hours to obtain the resulting polyvinyl acetate. Details of the above polymerization step are shown in Table 1. Fig. 1 is a plot of the number-average molecular weight (Mn) against the conversion of VAc. The ratio (Mn/theoretical Mn) of the number-average molecular weight (Mn) (measurement value) to the theoretical number-average molecular weight (theoretical Mn) of the polymer at the conversion of VAc of 5.0% obtained from Fig. 1 was 3.0.

Example 2

Polymerization Step

Polymerization reaction was performed in the same manner as that in Example 1 except for adding 0.24 parts by mass of methyl cinnamate as the organic compound (A) and heating to have the temperature inside the reactor at 50°C and stirring. After the polymerization terminator was added, the reactor was connected to a vacuum line, and unreacted VAc was azeotropically removed while adding methanol to obtain a methanol solution of the polyvinyl acetate. Details are shown in Table 1.

Saponification Step

Then, in a reactor same as above, the concentration of the methanol solution was adjusted to have 1834 parts by mass of methanol based on 100 parts by mass of the polyvinyl acetate thus obtained, and then a water bath was

heated and the solution was heated and stirred until the internal temperature reached 40°C. Thereto, 66.4 parts by mass of a methanol solution of sodium hydroxide (concentration of 14 mass%, 9.3 parts by mass as sodium hydroxide) was added. The methanol solution containing polyvinyl acetate thus prepared having a concentration of 5 mass% was subjected to saponification reaction at 65°C for 1 hour. After deliquoring, a phenolphthalein solution was added to the washing (methanol) and the deliquored material was washed with methanol until no alkaline reaction was observed to remove sodium hydroxide and sodium acetate. The solid obtained by centrifugal dewatering was dried in a vacuum dryer at 40°C for 24 hours to obtain a polyvinyl alcohol in white. The degree of saponification was 99.9%.

Example 3

Polymerization Step

Polymerization reaction was performed in the same manner as that in Example 1 except for adding 0.15 parts by mass of methyl cinnamate as the organic compound (A) and 0.29 parts by mass of V-70 as the radical generator (B), heating to have the temperature inside the reactor at 45°C, and adding 0.84 parts by mass of 1,1-DPEt as the terminator to obtain polyvinyl acetate. Details are shown in Table 1.

Example 4

Polymerization Step

Polymerization reaction was performed in the same manner as that in Example 1 except for adding 0.09 parts by mass of methyl cinnamate as the organic compound (A) and 0.18 parts by mass of V-70 as the radical generator (B), heating to have the temperature inside the reactor at 40°C, and adding 0.52 parts by mass of 1,1-DPEt as the terminator to obtain polyvinyl acetate. Details are shown in Table 1.

Example 5

Polymerization Step

Polymerization reaction was performed in the same manner as that in Example 1 except for adding 1.88 parts by mass of methyl cinnamate as the organic compound (A) and 35.81 parts by mass of V-70 as the radical generator (B), heating to have the temperature inside the reactor at 45°C, and adding 10.47 parts by mass of 1,1-DPEt as the terminator to obtain polyvinyl acetate. Details are shown in Table 1.

Example 6

Polymerization Step

Polymerization reaction was performed in the same manner as that in Example 1 except for adding 0.24 parts by mass of methyl cinnamate as the organic compound (A) and 0.22 parts by mass of V-70 as the radical generator (B) to obtain polyvinyl acetate. Details are shown in Table 1.

Example 7

Polymerization Step

Polymerization reaction was performed in the same manner as that in Example 1 except for adding totally 1000 parts by mass of N-vinylpyrrolydone as the monomer (Y), 0.18 parts by mass of methyl cinnamate as the organic compound (A), and 0.35 parts by mass of V-70 as the radical generator (B) to obtain polyvinylpyrrolydone.

Example 8

Polymerization Step

Polymerization reaction was performed in the same manner as that in Example 1 except for adding 0.24 parts by mass of methyl cinnamate as the organic compound (A), heating to have the temperature inside the reactor at 65°C, and adding 0.81 parts by mass of sorbic acid as the terminator to obtain polyvinyl acetate. Details are shown in Table 1.

Example 9

Polymerization Step

Polymerization reaction was performed in the same manner as that in Example 1 except for adding 0.24 parts by mass of methyl cinnamate as the organic compound (A) and 25.0 parts of methanol as the solvent, and heating to have the temperature inside the reactor at 60°C and stirring to obtain polyvinyl acetate. Details are shown in Table 1.

Example 10

Polymerization Step

Polymerization reaction was performed in the same manner as that in Example 1 except for adding 1000 parts by mass of styrene as the monomer (Y), 0.18 parts by mass of trans-benzalacetone as the organic compound (A), 0.37 parts by mass of V-70 as the radical generator (B), and adding 0.81 parts by mass of sorbic acid as the terminator to obtain polystyrene. Details are shown in Table 1.

Example 11

Polymerization Step

Polymerization reaction was performed in the same manner as that in Example 1 except for adding 0.21 parts by mass of trans-benzalacetone as the organic compound (A) and heating to have the temperature inside the reactor at 60°C to obtain polyvinyl acetate. Details are shown in Table 1.

Example 12

Polymerization Step

Polymerization reaction was performed in the same manner as that in Example 1 except for adding 0.21 parts by mass of coumarin as the organic compound (A) and heating to have the temperature inside the reactor at 45°C and stirring to obtain polyvinyl acetate. Details are shown in Table 1.

Example 13

Polymerization Step

Polymerization reaction was performed in the same manner as that in Example 1 except for adding 0.19 parts by mass of cinnamic alcohol as the organic compound (A) and heating to have the temperature inside the reactor at 60°C. Details are shown in Table 1.

Example 14

Polymerization Step

Polymerization reaction was performed in the same manner as that in Example 1 except for adding 0.28 parts by mass of β-ionone as the organic compound (A) and heating to have the temperature inside the reactor at 30°C to obtain polyvinyl acetate. Details are shown in Table 1.

Comparative Example 1

Polymerization Step

Polymerization reaction was performed in the same manner as that in Example 1 except for adding 0.22 parts by mass of 4-phenyl-2-butanone instead of the organic compound (A) and heating to have the temperature inside the reactor at 60°C to obtain polyvinyl acetate. Details are shown in Table 2.

Comparative Example 2

Polymerization Step

Polymerization reaction was performed in the same manner as that in Example 1 except for not adding the organic compound (A) and heating to have the temperature inside the reactor at 30°C to obtain polyvinyl acetate. Details are shown in Table 2.

Comparative Example 3

Polymerization Step

Polymerization reaction was performed in the same manner as that in Example 1 except for adding 0.24 parts by mass of methyl cinnamate as the organic compound (A) and 0.09 parts by mass of V-70 as the radical generator (B). Even after 5 hours, almost no progress of polymerization was found and thus the polymerization was cancelled. Details are shown in Table 2.

Example 15

Polymerization Step

To a reactor provided with a stirrer, a reflux condenser tube, and an inlet port for the radical generator (B), 900 parts by mass of VAc was added and then nitrogen was introduced into the reactor for inert gas purge. To a preparation container, 100 parts by mass of VAc, 0.24 parts by mass of cinnamic acid as the organic compound (A), and 0.45 parts by mass of V-70 as the radical generator (B) were added and dissolved, and then nitrogen was introduced for inert gas purge. The solution in the preparation container was added to the reactor, and then heated to have the temperature inside the reactor at 45°C and stirred. Sampling was appropriately performed and the progress of the polymerization was checked from the solid concentration. When the conversion of VAc reached 8.4 mass%, 30.00 parts by mass of MA was added. At the conversion of 8.4 mass%, the number-average molecular weight (Mn) of the polymer was 150,700. The calculated molar ratio (Y/A) was 8240. Subsequently, heating and stirring were carried out to check the progress of the polymerization from the solid concentration and also to perform GPC measurement and $^1$H-NMR measurement of the sampled polymer, and when the total conversion of VAc and MA reached 17.4 mass%, 1.31 parts by mass of 1,1-DPEt was added as a polymerization inhibitor. At this point, the number-average molecular weight (Mn) was 233,700. The reactor was connected to a vacuum line, and unreacted VAc was azeotropically removed while adding methanol to obtain a methanol solution of the vinyl acetate-based block copolymer. Details are shown in Table 2. The content of the MA units was 9 mol% in the vinyl acetate-based block copolymer thus obtained, and the content of the MA units was 25 mol% in the copolymer block containing the VAc units and the MA units.

Saponification Step

Then, in a reactor same as above, the concentration of the methanol solution was adjusted to have 1834 parts by mass of methanol based on 100 parts by mass of the vinyl acetate-based block copolymer thus obtained, and then a water bath was heated and the solution was heated and stirred until the internal temperature reached 40°C. Thereto, 66.4 parts by mass of a methanol solution of sodium hydroxide (concentration of 14 mass%, 9.3 parts by mass as sodium hydroxide) was added. The vinyl acetate-based block copolymer solution thus prepared having a concentration of 5 mass% was subjected to saponification reaction at 65°C for 1 hour. To the saponified product obtained by deliquoring, 46.5 parts by mass of sodium hydroxide, 2000 parts by mass of dehydrated methanol, and 210 parts by mass of ion exchanged water were added, and heating was further continued at 65°C for 1 hour. After deliquoring, a phenolphthalein solution was added to the washing (methanol) and the deliquored material was washed with methanol until no alkaline reaction was observed to remove sodium hydroxide and sodium acetate. The solid obtained by centrifugal dewatering was dried in a vacuum dryer at 40°C for 24 hours to obtain a vinyl alcohol-based block copolymer in white (binary block copolymer of vinyl alcohol-based polymer block - copolymer block containing vinyl alcohol-based monomer unit and acrylic acid-based monomer unit). The degree of saponification was 99.9%. Details are shown in Table 2.

Example 16

Polymerization Step

To a reactor provided with a stirrer, a reflux condenser tube, and an inlet port for the radical generator (B), 900 parts by mass of VAc was added and then nitrogen was introduced into the reactor for inert gas purge. To a preparation container, 100 parts by mass of VAc, 0.24 parts by mass of cinnamic acid as the organic compound (A), and 0.45 parts by mass of V-70 as the radical generator (B) were added and dissolved, and then nitrogen was introduced for inert gas purge. The solution in the preparation container was added to the reactor, and then heated to have the temperature inside the reactor at 45°C and stirred. Sampling was appropriately performed and the progress of the polymerization was checked from the solid concentration. When the conversion of VAc reached 10.2 mass%, the pressure was adjusted to have Et at an internal pressure of 9 [bar]. The calculated Y/A molar ratio was 9120. At the conversion of 10.2 mass%, the number-average molecular weight (Mn) of the polymer was 176,600. Subsequently, heating and stirring were carried out to check the progress of the polymerization from the solid concentration and also to perform GPC measurement and $^1$H-NMR measurement of the sampled polymer, and when the total conversion of VAc and Et reached 18.3 mass%, 1.31 parts by mass of 1,1-DPEt was added as a polymerization inhibitor. At this point, the number-average molecular weight (Mn) was 203,600. The reactor was connected to a vacuum line, and unreacted VAc was azeotropically removed while adding methanol to obtain a methanol solution of the vinyl acetate-based block copolymer. Details are shown in Table 2. The content of the Et units was 2 mol% in the vinyl acetate-based block copolymer thus obtained, and the content of the Et units was 12 mol% in the copolymer block containing the VAc units and the Et units.

Saponification Step

Then, saponification reaction was carried out in the same manner as that in Example 2 to obtain a vinyl alcohol-based block copolymer in white (binary block copolymer of vinyl alcohol-based polymer block - copolymer block containing vinyl alcohol-based monomer unit and Et unit). Details are shown in Table 2.

Example 17

Polymerization Step

To a reactor provided with a stirrer, a reflux condenser tube, and an inlet port for the radical generator (B), 900 parts by mass of VAc and 180 parts by mass of MA were added and then nitrogen was introduced into the reactor for inert gas purge. To a preparation container, 100 parts by mass of VAc, 0.63 parts by mass of cinnamic acid as the organic compound (A), and 3.58 parts by mass of V-70 as the radical generator (B) were added and dissolved, and then nitrogen was introduced for inert gas purge. The calculated molar ratio (Y/A) was 3000. The solution in the preparation container was added to the reactor, and then heated to have the temperature inside the reactor at 40°C and stirred. Sampling was appropriately performed and the progress of the polymerization was checked from the solid concentration, and at the total conversion of VAc and MA of 25.0 mass%, the complete consumption of MA [molar ratio (acrylic ester/vinyl ester) of less than 0.00001] was confirmed by $^1$H-NMR. At this point, the number-average molecular weight (Mn) was 109,400. Immediately after that, 4000.00 parts by mass of VAc was added. At this point, the total conversion of VAc and MA was 5.8 mass% and the calculated molar ratio (Y/A) was 13000. Subsequently, heating and stirring were carried out to check the progress of the polymerization from the solid concentration and also to perform GPC measurement and $^1$H-NMR measurement of the sampled polymer, and when the total conversion of VAc and MA reached 20.3 mass%, 3.49 parts by mass of 1,1-DPEt was added as a polymerization inhibitor. At this point, the number-average molecular weight (Mn) was 195,500. The reactor was connected to a vacuum line, and unreacted VAc was azeotropically removed while adding methanol to obtain a methanol solution of the vinyl acetate-based block copolymer. Details are shown in Table 2. The content of the MA units was 19 mol% in the vinyl acetate-based block copolymer thus obtained, and the content of the MA units was 63 mol% in the copolymer block containing the VAc units and the MA units.

Saponification Step

Then, saponification reaction was carried out in the same manner as that in Example 2 to obtain a vinyl alcohol-based block copolymer in white. Details are shown in Table 2.

Example 18

Polymerization Step

To a reactor provided with a stirrer, a reflux condenser tube, and an inlet port for the radical generator (B), 900 parts by mass of VAc was added and then nitrogen was introduced into the reactor for inert gas purge. To a preparation container, 100 parts by mass of VAc, 0.24 parts by mass of cinnamic acid as the organic compound (A), and 1.34 parts by mass of V-70 as the radical generator (B) were added and dissolved, and then nitrogen was introduced for inert gas purge. The solution in the preparation container was added to the reactor, and then heated to have the temperature inside the reactor at 40°C and stirred. Sampling was appropriately performed and the progress of the polymerization was checked from the solid concentration. When the conversion of VAc reached 9.7 mass%, 83.72 parts by mass of AA was added. At the conversion of 9.7 mass%, the number-average molecular weight (Mn) of the polymer was 104,900. The calculated molar ratio (Y/A) was 8100. Subsequently, heating and stirring were carried out to check the progress of the polymerization from the solid concentration and also to perform GPC measurement and $^1$H-NMR measurement of the sampled polymer, and when the total conversion of Vac and AA reached 16.2 mass%, 1.31 parts by mass of 1,1-DPEt was added as a polymerization inhibitor. At this point, the number-average molecular weight (Mn) was 144,400. The reactor was connected to a vacuum line, and unreacted Vac was azeotropically removed while adding methanol to obtain a methanol solution of the vinyl acetate-based block copolymer. Details are shown in Table 2. The content of the AA units was 8 mol% in the vinyl acetate-based block copolymer thus obtained, and the content of the AA units was 20 mol% in the copolymer block containing the Vac units and the AA units.

Saponification Step

Then, saponification reaction was carried out in the same manner as that in Example 2 to obtain a vinyl alcohol-based block copolymer in white. Details are shown in Table 2.

Example 19

Polymerization Step

To a reactor provided with a stirrer, a reflux condenser tube, and an inlet port for the radical generator (B), 900 parts by mass of Vac was added and then nitrogen was introduced into the reactor for inert gas purge. To a preparation container, 100 parts by mass of Vac, 0.24 parts by mass of cinnamic acid as the organic compound (A), and 1.34 parts by mass of V-70 as the radical generator (B) were added and dissolved, and then nitrogen was introduced for inert gas purge. The solution in the preparation container was added to the reactor, and then heated to have the temperature inside the reactor at 40°C and stirred. Sampling was appropriately performed and the progress of the polymerization was checked from the solid concentration. When the conversion of Vac reached 8.4 mass%, 115.10 parts by mass of DMAA was added. At the conversion of 8.4 mass%, the number-average molecular weight (Mn) of the polymer was 114,600. The calculated molar ratio (Y/A) was 8100. Subsequently, heating and stirring were carried out to check the progress of the polymerization from the solid concentration and also to perform GPC measurement and $^1$H-NMR measurement of the sampled polymer, and when the total conversion of VAc and DMAA reached 19.9 mass%, 1.31 parts by mass of 1,1-DPEt was added as a polymerization inhibitor. At this point, the number-average molecular weight (Mn) was 145,000. The reactor was connected to a vacuum line, and unreacted VAc was azeotropically removed while adding methanol to obtain a methanol solution of the vinyl acetate-based block copolymer. Details are shown in Table 2. The content of the DMAA units was 6 mol% in the vinyl acetate-based block copolymer thus obtained, and the content of the DMAA units was 20 mol% in the copolymer block containing the VAc units and the DMAA units.

Saponification Step

Then, saponification reaction was carried out in the same manner as that in Example 2 to obtain a vinyl alcohol-based block copolymer in white. Details are shown in Table 2.

Example 20

Polymerization Step

To a reactor provided with a stirrer, a reflux condenser tube, and an inlet port for the radical generator (B), 900 parts by mass of VAc was added and then nitrogen was introduced into the reactor for inert gas purge. To a preparation

container, 100 parts by mass of VAc, 0.24 parts by mass of cinnamic acid as the organic compound (A), and 1.34 parts by mass of V-70 as the radical generator (B) were added and dissolved, and then nitrogen was introduced for inert gas purge. The solution in the preparation container was added to the reactor, and then heated to have the temperature inside the reactor at 40°C and stirred. Sampling was appropriately performed and the progress of the polymerization was checked from the solid concentration. When the conversion of VAc reached 7.4 mass%, 113.95 parts by mass of MAn was added. At the conversion of 7.4 mass%, the number-average molecular weight (Mn) of the polymer was 74,400. The calculated molar ratio (Y/A) was 8100. Subsequently, heating and stirring were carried out to check the progress of the polymerization from the solid concentration and also to perform GPC measurement and $^1$H-NMR measurement of the sampled polymer, and when the total conversion of VAc and MAn reached 18.1 mass%, 1.31 parts by mass of 1,1-DPEt was added as a polymerization inhibitor. At this point, the number-average molecular weight (Mn) was 100,800. The reactor was connected to a vacuum line, and unreacted VAc was azeotropically removed while adding methanol to obtain a methanol solution of the vinyl acetate-based block copolymer. Details are shown in Table 2. The content of the MAn units was 8 mol% in the vinyl acetate-based block copolymer thus obtained, and the content of the MAn units was 13 mol% in the copolymer block containing the VAc units and the MAn units.

Saponification Step

Then, saponification reaction was carried out in the same manner as that in Example 2 to obtain a vinyl alcohol-based block copolymer in white. Details are shown in Table 2.

Example 21

Polymerization Step

In the polymerization in Example 1, the polymer was sampled immediately before adding the polymerization terminator and dropped in hexane to collect the reprecipitated polymer. The collected polymer was dissolved in methanol and dropped in hexane again and dried to obtain polyvinyl acetate. The content (W) of the structure derived from trans-cinnamic acid at a polyvinyl acetate end was 0.036 mol%. The molar ratio (F) of the content of the structure derived from trans-cinnamic acid to the amount of polyvinyl acetate end was 0.95. Details are shown in Table 2.

Example 22

Polymerization Step

In the polymerization in Example 5, the polymer was sampled immediately before adding the polymerization terminator and dropped in hexane to collect the reprecipitated polymer. The collected polymer was dissolved in methanol and dropped in hexane again and dried to obtain polyvinyl acetate. The content (W) of the structure derived from methyl cinnamate at a polyvinyl acetate end was 0.48 mol%, and the molar ratio (F) of the content of the structure derived from methyl cinnamate to the amount of polyvinyl acetate end was 0.97.

[Table 1]

| | A | B | Y | B/A | Y/A | Temperature [°C] | Time [h] | Conversion [%] | Mn | Theoretical Mn | Mn/Theoretical Mn | Mn/ Theoretical Mn (Conversion of 5%) | Mw/Mn |
|---|---|---|---|---|---|---|---|---|---|---|---|---|---|
| Example 1 | Trans-Cinnamic Acid | V70 | VAc | 1 | 8000 | 50 | 1.5 | 3.9 | 86800 | 26800 | 3.2 | 3.0 | 1.85 |
| | | | | | | | 2.5 | 9.5 | 132800 | 65300 | 2.0 | | 2.14 |
| | | | | | | | 3.0 | 12.7 | 166900 | 87100 | 1.9 | | 2.38 |
| | | | | | | | 3.8 | 21.7 | 226400 | 149300 | 1.5 | | 2.57 |
| Example 2 | Methyl Cinnamate | V70 | VAc | 1 | 8000 | 50 | 0.8 | 4.5 | 88100 | 31200 | 2.8 | 2.7 | 1.89 |
| | | | | | | | 1.3 | 8.7 | 122200 | 59600 | 2.1 | | 207 |
| | | | | | | | 1.6 | 13.4 | 154900 | 92200 | 1.7 | | 2.27 |
| | | | | | | | 2.2 | 20.9 | 208500 | 143700 | 1.5 | | 2.57 |
| Example 3 | Methyl Cinnamate | V70 | VAc | 1 | 12500 | 45 | 1.0 | 2.8 | 109900 | 30100 | 3.7 | 2.5 | 1.83 |
| | | | | | | | 1.5 | 4.0 | 127700 | 42500 | 3.0 | | 1.88 |
| | | | | | | | 1.6 | 4.6 | 132300 | 49600 | 2.7 | | 1.94 |
| Example 4 | Methyl Cinnamate | V70 | VAc | 1 | 20000 | 40 | 1.9 | 2.9 | 161641 | 50600 | 3.2 | 2.6 | 1.94 |
| | | | | | | | 3.2 | 6.8 | 232750 | 116600 | 2.0 | | 205 |
| | | | | | | | 3.7 | 9.4 | 240575 | 161400 | 1.5 | | 2.38 |
| | | | | | | | 4.2 | 13.5 | 312213 | 231600 | 1.3 | | 220 |
| Example 5 | Methyl Cinnamate | V70 | VAc | 10 | 1000 | 45 | 1.7 | 5.1 | 7300 | 4500 | 1.6 | 1.6 | 1.55 |
| | | | | | | | 2.7 | 12.0 | 11100 | 10300 | 1.1 | | 207 |
| | | | | | | | 3.2 | 17.7 | 16000 | 15300 | 1.0 | | 2.35 |
| | | | | | | | 3.5 | 20.7 | 17400 | 17900 | 1.0 | | 2.74 |
| Example 6 | Methyl Cinnamate | V70 | VAc | 0.5 | 8000 | 50 | 4.8 | 2.1 | 66200 | 14600 | 4.5 | 1.4 | 1.96 |
| | | | | | | | 5.8 | 3.1 | 74000 | 21400 | 3.5 | | 2.14 |

(continued)

| | A | B | Y | B/A | Y/A | Temperature [°C] | Time [h] | Conversion [%] | Mn | Theoretical Mn | Mn/Theoretical Mn | Mn/ Theoretical Mn (Conversion of 5%) | Mw/Mn |
|---|---|---|---|---|---|---|---|---|---|---|---|---|---|
| Example 7 | Methyl Cinnamate | V70 | VP | 1 | 8000 | 50 | 0.4 | 3.9 | 142300 | 34900 | 4.1 | 3.6 | 2.00 |
| | | | | | | | 0.6 | 7.4 | 169200 | 66100 | 2.6 | | 2.15 |
| | | | | | | | 0.8 | 12.2 | 195700 | 108400 | 1.8 | | 2.28 |
| | | | | | | | 1.1 | 21.4 | 223300 | 190300 | 1.2 | | 2.37 |
| Example 8 | Methyl Cinnamate | V70 | VAc | 1 | 8000 | 65 | 0.7 | 3.9 | 73300 | 26900 | 2.7 | 2.4 | 1.75 |
| | | | | | | | 0.9 | 7.7 | 90700 | 52900 | 1.7 | | 203 |
| | | | | | | | 1.2 | 16.5 | 146100 | 113700 | 1.3 | | 2.25 |
| | | | | | | | 1.5 | 25.2 | 201400 | 173400 | 1.2 | | 2.24 |
| Example 9 [1)] | Methyl Cinnamate | V70 | VAc | 1 | 8000 | 60 | 0.2 | 4.0 | 52300 | 27300 | 1.9 | 1.7 | 1.85 |
| | | | | | | | 0.5 | 6.4 | 63200 | 43800 | 1.4 | | 1.94 |
| | | | | | | | 1.1 | 13.6 | 91200 | 93700 | 1.0 | | 2.13 |
| | | | | | | | 1.5 | 17.5 | 110300 | 120600 | 0.9 | | 1.99 |
| Example 10 | Trans-Benzalacetone | V70 | Sty | 1 | 8000 | 50 | 0.9 | 2.5 | 63800 | 20900 | 3.1 | 1.9 | 1.66 |
| | | | | | | | 1.2 | 3.2 | 66400 | 27000 | 2.5 | | 1.66 |
| | | | | | | | 1.8 | 4.2 | 70800 | 35000 | 2.0 | | 1.69 |
| | | | | | | | 3.0 | 7.3 | 85100 | 61100 | 1.4 | | 1.75 |
| Example 11 | Trans-Benzalacetone | V70 | VAc | 1 | 8000 | 60 | 1.3 | 2.0 | 53700 | 13800 | 3.9 | 2.7 | 1.70 |
| | | | | | | | 2.6 | 6.1 | 92600 | 41900 | 2.2 | | 220 |
| | | | | | | | 3.6 | 12.9 | 162200 | 88700 | 1.8 | | 2.31 |
| | | | | | | | 5.1 | 22.3 | 207100 | 153100 | 1.4 | | 2.72 |
| Example 12 | Coumarin | V70 | VAc | 1 | 8000 | 45 | 0.1 | 2.2 | 197900 | 15500 | 12.8 | 7.7 | 1.90 |
| | | | | | | | 0.6 | 6.7 | 205300 | 46300 | 4.4 | | 200 |
| | | | | | | | 0.9 | 10.9 | 242300 | 74700 | 3.2 | | 1.93 |
| | | | | | | | 1.5 | 19.1 | 289200 | 131400 | 2.2 | | 202 |

(continued)

| | A | B | Y | B/A | Y/A | Temperature [°C] | Time [h] | Conversion [%] | Mn | Theoretical Mn | Mn/Theoretical Mn | Mn/ Theoretical Mn (Conversion of 5%) | Mw/Mn |
|---|---|---|---|---|---|---|---|---|---|---|---|---|---|
| Example 13 | Cinnamic Alcohol | V70 | VAc | 1 | 8000 | 60 | 0.5 | 3.2 | 141400 | 22000 | 6.4 | 5.4 | 1.80 |
| | | | | | | | 2.5 | 10.3 | 157300 | 70800 | 2.2 | | 1.83 |
| | | | | | | | 3.5 | 13.3 | 172243 | 91700 | 1.9 | | 1.86 |
| | | | | | | | 4.5 | 15.3 | 174300 | 105100 | 1.7 | | 1.91 |
| Example 14 | β-Ionone | V70 | VAc | 1 | 8000 | 30 | 0.2 | 3.0 | 212900 | 20800 | 10.2 | 6.9 | 1.84 |
| | | | | | | | 0.5 | 60 | 218500 | 41300 | 5.3 | | 1.83 |
| | | | | | | | 1.0 | 10.6 | 211500 | 72900 | 2.9 | | 1.94 |
| | | | | | | | 1.8 | 16.0 | 233800 | 109900 | 2.1 | | 1.82 |
| Comparative Example 1 | 4-Phenyl-2-Butanone | V70 | VAc | 1 | 8000 | 60 | 0.1 | 2.9 | 302700 | 20000 | 15.1 | 10.8 | 1.91 |
| | | | | | | | 0.2 | 7.6 | 286400 | 52600 | 5.4 | | 1.96 |
| | | | | | | | 0.5 | 14.1 | 311400 | 97200 | 3.2 | | 1.97 |
| | | | | | | | 0.7 | 19.4 | 311000 | 133500 | 2.3 | | 2.01 |
| Comparative Example 2 | - | V70 | VAc | 1 | 8000 | 30 | 0.0 | 3.5 | 249200 | - | - | - | 2.06 |
| | | | | | | | 0.1 | 7.1 | 277100 | - | - | | 1.93 |
| | | | | | | | 0.3 | 12.1 | 271800 | - | - | | 1.99 |
| | | | | | | | 0.6 | 22.4 | 259100 | - | - | | 2.11 |

1) Methanol was added to the reactor to perform solution polymerization.

[Table 2]

| | A | B | Y | B/A | Y/A | Temperature [°C] | Time [h] | Conversion [%] | Mn | Theoretica l Mn | Mn/ Theoretical Mn | Mn/Theoretical Mn (Conversion of 5%) | Mw/Mn |
|---|---|---|---|---|---|---|---|---|---|---|---|---|---|
| Comparative Example 3 | Methyl Cinnamate | V70 | VAc | 0 | 8000 | 50 | 0.5 | 0.1 | - | 688 | - | - | - |
| | | | | | | | 1.0 | 0.2 | - | 1376 | - | | - |
| | | | | | | | 3.0 | 0.3 | - | 2064 | - | | - |
| | | | | | | | 5.0 | 0.3 | - | 2064 | - | | - |
| Example 15 | Methyl Cinnamate | V70 | VAc | 1 | 8000[2)] | 45 | 1.1 | 2.7 | 78500 | 18700 | 4.2 | 2.9 | 1.79 |
| | | | | | | | 1.7 | 4.4 | 91900 | 30100 | 3.1 | | 1.93 |
| | | | | | | | 2.0 | 5.5 | 105200 | 37900 | 2.8 | | 1.96 |
| | | | | | | | 3.0 | 8.4 | 150700 | 57600 | 2.6 | | 2.32 |
| | | | MA | | 8240[3)] | | 3.1 | 10.4 | 151996 | 74000 | 2.1 | | 2.47 |
| | | | | | | | 3.3 | 12.6 | 188387 | 89600 | 2.1 | | 300 |
| | | | | | | | 3.6 | 16.3 | 210269 | 115700 | 1.8 | | 320 |
| | | | | | | | 4.1 | 17.4 | 233697 | 123400 | 1.9 | | 308 |
| Example 16 | Methyl Cinnamate | V70 | VAc | 1 | 8000[2)] | 45 | 1.5 | 3.2 | 109900 | 22100 | 5.0 | 4.0 | 1.91 |
| | | | | | | | 2.0 | 6.1 | 145600 | 41800 | 3.5 | | 1.88 |
| | | | | | | | 2.3 | 8.8 | 164700 | 60700 | 2.7 | | 205 |
| | | | | | | | 2.5 | 10.2 | 176600 | 70000 | 2.5 | | 2.08 |
| | | | Et[1)] | | 9120[3)] | | 2.6 | 11.9 | 177900 | 81900 | 2.2 | | 2.21 |
| | | | | | | | 2.9 | 14.7 | 187400 | 101000 | 1.9 | | 2.25 |
| | | | | | | | 3.1 | 15.9 | 193200 | 109600 | 1.8 | | 2.21 |
| | | | | | | | 3.3 | 18.3 | 203600 | 126000 | 1.6 | | 2.15 |

(continued)

| | A | B | Y | B/A | Y/A | Temperature [°C] | Time [h] | Conversion [%] | Mn | Theoretica l Mn | Mn/ Theoretical Mn | Mn/Theoretical Mn (Conversion of 5%) | Mw/Mn |
|---|---|---|---|---|---|---|---|---|---|---|---|---|---|
| Example 17 | Methyl Cinnamate | V70 | VAc + MA | 3 | 3000[2)] | 40 | 1.5 | 2.1 | 31700 | 5500 | 5.8 | 4.7 | 2.94 |
| | | | | | | | 2.0 | 8.6 | 73500 | 22200 | 3.3 | | 2.60 |
| | | | | | | | 2.6 | 16.9 | 102800 | 43600 | 2.4 | | 2.37 |
| | | | | | | | 3.3 | 25.0 | 109400 | 64500 | 1.7 | | 2.31 |
| | | | VAc | | 13000[3)] | | 5.1 | 7.8 | 140037 | 87696 | 1.6 | | 2.10 |
| | | | | | | | 5.6 | 10.3 | 161800 | 114700 | 1.4 | | 205 |
| | | | | | | | 6.1 | 15.6 | 184900 | 174400 | 1.1 | | 2.17 |
| | | | | | | | 6.7 | 20.3 | 195500 | 226600 | 0.9 | | 2.46 |

1) Internal pressure: 9 bar
2) Value used for calculation of Mn/theoretical Mn (conversion of 5%)
3) Total amount of added organic compound (A) and molar ratio (Y/A) obtained using total amount of organic compound (A)

| | A | B | Y | B/A | Y/A | Temperature [°C] | Time [h] Mn | Conversion [%] | Mn | Theoretical Mn | Mn/ Theoretical Mn | Mn/Theoretical Mn (Conversion of 5%) | Mw/Mn |
|---|---|---|---|---|---|---|---|---|---|---|---|---|---|
| Example 18 | Methyl Cinnamate | V70 | VAc | 3 | 8000[2)] | 40 | 1.4 | 3.2 | 63700 | 22000 | 2.9 | 2.4 | 1.83 |
| | | | | | | | 1.9 | 5.3 | 84300 | 36500 | 2.3 | | 1.99 |
| | | | | | | | 2.3 | 8.3 | 77100 | 57100 | 1.4 | | 250 |
| | | | | | | | 2.6 | 9.7 | 104900 | 66600 | 1.6 | | 2.22 |
| | | | AA | | 8100[3)] | | 2.7 | 11.1 | 122700 | 77100 | 1.6 | | 1.88 |
| | | | | | | | 2.8 | 13.8 | 125000 | 96100 | 1.3 | | 1.95 |
| | | | | | | | 3.2 | 16.2 | 144400 | 112800 | 1.3 | | 209 |

(continued)

| | A | B | Y | B/A | Y/A | Temperature [°C] | Time [h] Mn | Conversion [%] | Mn | Theoretical Mn | Mn/ Theoretical Mn | Mn/Theoretical Mn (Conversion of 5%) | Mw/Mn |
|---|---|---|---|---|---|---|---|---|---|---|---|---|---|
| Example 19 | Methyl Cinnamate | V70 | VAc | 3 | 8000 2) | 40 | 1.3 | 2.3 | 64100 | 15900 | 4.0 | 2.7 | 1.65 |
| | | | | | | | 2.1 | 4.7 | 87600 | 32200 | 2.7 | | 1.64 |
| | | | | | | | 2.9 | 8.4 | 114600 | 57700 | 2.0 | | 1.90 |
| | | | DM AA | | 8100 3) | | 3.9 | 16.1 | 127100 | 112500 | 1.1 | | 2.13 |
| | | | | | | | 4.4 | 199 | 145000 | 138800 | 1.0 | | 1.90 |
| Example 20 | Methyl Cinnamate | V70 | VAc | 1 | 8000 2) | 40 | 0.9 | 1.6 | 42200 | 11300 | 3.7 | 1.8 | 1.82 |
| | | | | | | | 2.0 | 4.0 | 55200 | 27700 | 2.0 | | 1.93 |
| | | | | | | | 2.9 | 7.4 | 74400 | 51000 | 1.5 | | 2.16 |
| | | | MAn | | 8100 3) | | 3.9 | 13.0 | 90500 | 90900 | 1.0 | | 2.42 |
| | | | | | | | 4.4 | 13.2 | 97200 | 92300 | 1.1 | | 2.37 |
| | | | | | | | 5.4 | 18.1 | 100800 | 126400 | 0.8 | | 2.56 |
| Example 21 | Trans-Cinnamic Acid | V70 | VAc | 1 | 8000 | 50 | 1.5 | 3.9 | 86800 | 26800 | 3.2 | 3.0 | 1.85 |
| | | | | | | | 2.5 | 9.5 | 132800 | 65300 | 2.0 | | 2.14 |
| | | | | | | | 3.0 | 12.7 | 166900 | 87100 | 1.9 | | 2.38 |
| | | | | | | | 3.8 | 21.7 | 226400 | 149300 | 1.5 | | 2.57 |
| Example 22 | Methyl Cinnamate | V70 | VAc | 10 | 1000 | 45 | 1.7 | 5.1 | 7300 | 4500 | 1.6 | 1.6 | 1.55 |
| | | | | | | | 2.7 | 12.0 | 11100 | 10300 | 1.1 | | 207 |
| | | | | | | | 3.2 | 17.7 | 16000 | 15300 | 1.0 | | 2.35 |
| | | | | | | | 3.5 | 20.7 | 17400 | 17900 | 1.0 | | 2.74 |

1) Internal pressure: 9 bar
2) Value used for calculation of Mn/theoretical Mn (conversion of 5%)
3) Total amount of added organic compound (A) and molar ratio (Y/A) obtained using total amount of organic compound (A)

In Examples 1 through 20, the ratio (Mn/theoretical Mn) at the initial stage of polymerization was 10.0 or less and Mn increased with an increase in the conversion, and it was thus confirmed that polymerization progressed in a controlled manner.

In Examples 1 through 11 and 15 through 20, the ratio (Mn/theoretical Mn) at the initial stage of polymerization was 5.0 or less and Mn increased with an increase in the conversion, and it was thus confirmed that polymerization progressed more preferably in a controlled manner.

In Examples 21 through 22, it was confirmed that the polymer thus obtained has a structure represented by the formula (V) or (VI) at an end thereof. Since the molar ratio (F) of the content of the structure represented by the formula (V) or (VI) to the amount of polymer end is close to 1, it was confirmed that the polymer quantitatively has the structure represented by the formula (V) or (VI).

In Comparative Example 1, since the value of Mn/ theoretical Mn at the initial stage of polymerization was more than 10.0, it was confirmed that the polymerization controllability was insufficient.

In Comparative Example 2, since Mn did not increase with an increase in the conversion, it was confirmed that the polymerization controllability was insufficient.

In Comparative Example 3, since the progress of polymerization was extremely delayed, it was confirmed that the productivity was insufficient.

## Claims

1. A method of producing a polymer, comprising a polymerization step of obtaining a polymer by controlled radical polymerization of a monomer (Y) in the presence of an organic compound (A) represented by a formula (I) below and a radical generator (B), wherein
   a molar ratio (B/A) of (B) to (A) is from 0.5 to 20.

   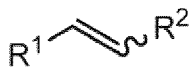 (I)

   [In the formula (I), $R^1$ denotes an alkenyl group or an aryl group, $R^2$ denotes a group represented by a formula (II) or (III) below, and $R^1$ and $R^2$ optionally form a ring by coupling with each other.]

   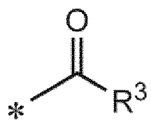 (II)

   [In the formula (II), $R^3$ denotes a hydrogen atom, a halogen atom, an alkyl group, an aryl group, an alkenyl group, an alkoxy group, an amino group, a nitro group, a cyano group, an acetyl group, a trifluoromethyl group, or a hydroxyl group, and * denotes a bond.]

   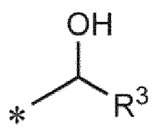 (III)

   [In the formula (III), $R^3$ is the same as that in the formula (II) above and * denotes a bond.]

2. The method of producing a polymer according to Claim 1, wherein $R^1$ is an aryl group.

3. The method of producing a polymer according to Claim 1 or 2, wherein the organic compound (A) is an E isomer.

4. The method of producing a polymer according to Claim 3, wherein the organic compound (A) is represented by a formula (IV) below.

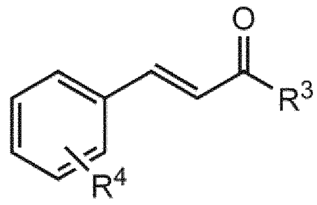

(IV)

[In the formula (IV), $R^3$ is the same as that in the formula (II) above and $R^4$ denotes a hydrogen atom, an alkyl group, an alkoxy group, or a hydroxyl group.]

**5.** The method of producing a polymer according to Claim 4, wherein $R^4$ is a hydrogen atom.

**6.** The method of producing a polymer according to any one of Claims 1 through 5, wherein $R^3$ is a methoxy group or a hydroxyl group.

**7.** The method of producing a polymer according to any one of Claims 1 through 6, wherein a molar ratio (Y/A) of the monomer (Y) to the organic compound (A) is from 300 to 30000.

**8.** The method of producing a polymer according to any one of Claims 1 through 7, wherein the monomer (Y) includes an olefin, a vinyl ester, an acrylic acid, an acrylic ester, an acrylamide-based monomer, a styrenic monomer, an N-vinylamide based monomer, or a dicarboxylic acid-based monomer.

**9.** The method of producing a polymer according to Claim 8, wherein the method comprises:

a polymerization step of obtaining a vinyl ester-based polymer by controlled radical polymerization of a vinyl ester in the presence of the organic compound (A) and the radical generator (B); and
a saponification step of obtaining a vinyl alcohol-based polymer by saponification of the obtained vinyl ester-based polymer.

**10.** The method of producing a polymer according to Claim 8, wherein the method comprises
a polymerization step of obtaining a vinyl ester-based block copolymer by sequentially performing, in the presence of the organic compound (A) and the radical generator (B), controlled radical polymerization of a vinyl ester and controlled radical polymerization of a vinyl ester and a monomer other than vinyl esters.

**11.** The method of producing a polymer according to Claim 10, wherein the method comprises:

a polymerization step of obtaining a vinyl ester-based block copolymer by sequentially performing, in the presence of the organic compound (A) and the radical generator (B), controlled radical polymerization of a vinyl ester and controlled radical polymerization of a vinyl ester and a monomer other than vinyl esters; and
a saponification step of obtaining a vinyl alcohol-based block copolymer by saponification of the obtained vinyl ester-based block copolymer.

**12.** A composition for radical polymerization, comprising: an organic compound (A) represented by a formula (I) below; and a radical generator (B), wherein
a molar ratio (B/A) of (B) to (A) is from 0.5 to 20.

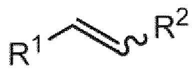

(I)

[In the formula (I), $R^1$ denotes an alkenyl group or an aryl group, $R^2$ denotes a group represented by a formula (II) or (III) below, and $R^1$ and $R^2$ optionally form a ring by coupling with each other.]

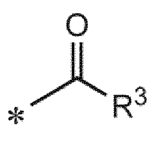

(II)

[In the formula (II), $R^3$ denotes a hydrogen atom, a halogen atom, an alkyl group, an aryl group, an alkenyl group, an alkoxy group, an amino group, a nitro group, a cyano group, an acetyl group, a trifluoromethyl group, or a hydroxyl group, and * denotes a bond.]

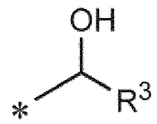

(III)

[In the formula (III), $R^3$ is the same as that in the formula (II) above and * denotes a bond.]

**13.** The composition for radical polymerization according to Claim 12, further comprising a monomer (Y), wherein a molar ratio (Y/A) of the monomer (Y) to the organic compound (A) is from 300 to 30000.

**14.** A radical polymerization control agent, comprising an organic compound (A) represented by a formula (I) below.

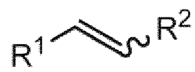

(I)

[In the formula (I), $R^1$ denotes an alkenyl group or an aryl group, $R^2$ denotes a group represented by a formula (II) or (III) below, and $R^1$ and $R^2$ optionally form a ring by coupling with each other.]

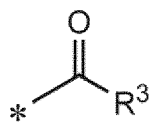

(II)

[In the formula (II), $R^3$ denotes a hydrogen atom, a halogen atom, an alkyl group, an aryl group, an alkenyl group, an alkoxy group, an amino group, a nitro group, a cyano group, an acetyl group, a trifluoromethyl group, or a hydroxyl group, and * denotes a bond.]

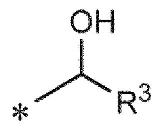

(III)

[In the formula (III), $R^3$ is the same as that in the formula (II) above and * denotes a bond.]

**15.** A polymer, comprising an end structure represented by a formula (V) or (VI) below.

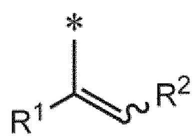

(V)

[In the formula (V), $R^1$ denotes an alkenyl group or an aryl group, $R^2$ denotes a group represented by a formula (II) or (III) below, and $R^1$ and $R^2$ optionally form a ring by coupling with each other. * denotes a bond.]

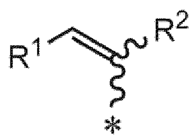

(VI)

[In the formula (VI), $R^1$ and $R^2$ are the same as those in the formula (V) above and * denotes a bond.]

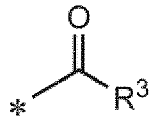

(II)

[In the formula (II), $R^3$ denotes a hydrogen atom, a halogen atom, an alkyl group, an aryl group, an alkenyl group, an alkoxy group, an amino group, a nitro group, a cyano group, an acetyl group, a trifluoromethyl group, or a hydroxyl group, and * denotes a bond.]

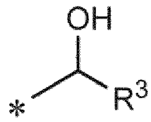

(III)

[In the formula (III), $R^3$ is the same as that in the formula (II) above and * denotes a bond.]

[FIG. 1]

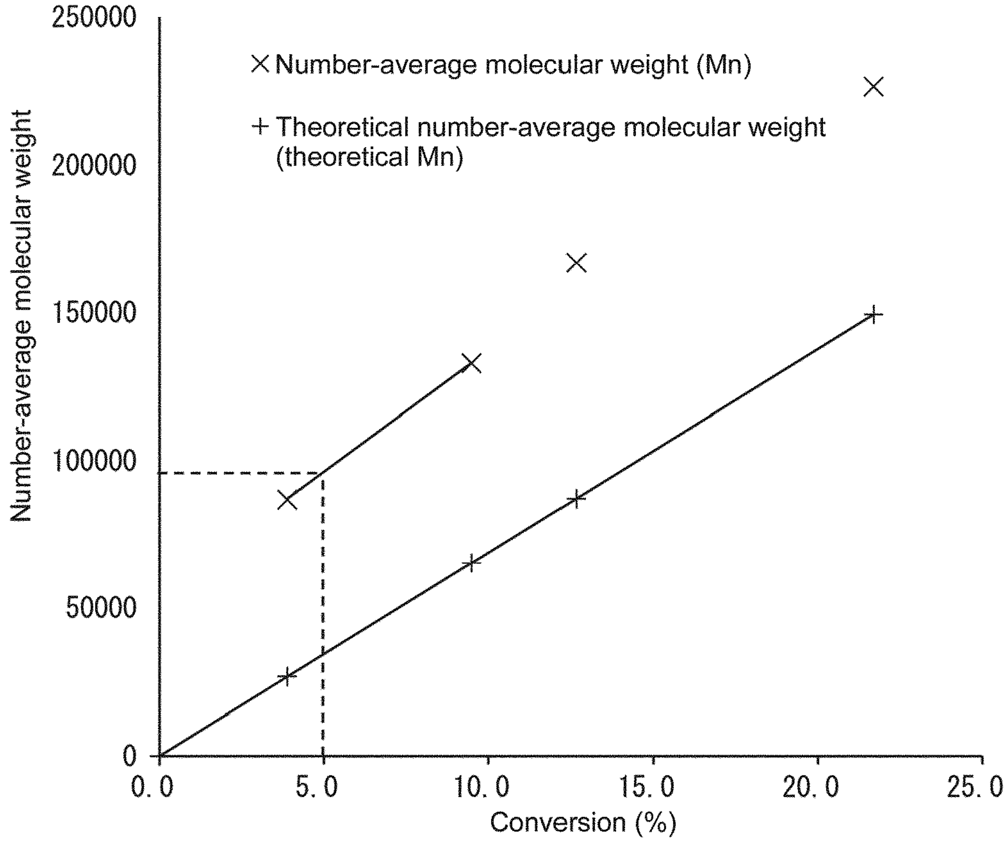
250000
200000
150000
100000
50000
0
Number-average molecular weight
×Number-average molecular weight (Mn)
+Theoretical number-average molecular weight (theoretical Mn)
0. 0
5. 0
10. 0
15. 0
20. 0
25. 0
Conversion (%)

**INTERNATIONAL SEARCH REPORT**

International application No. **PCT/JP2022/010635**

**A. CLASSIFICATION OF SUBJECT MATTER**

***C08F 18/04***(2006.01)i; ***C08F 293/00***(2006.01)i; ***C08F 2/38***(2006.01)i
FI: C08F2/38; C08F18/04; C08F293/00

According to International Patent Classification (IPC) or to both national classification and IPC

**B. FIELDS SEARCHED**

Minimum documentation searched (classification system followed by classification symbols)

C08F2/00-2/60; C08F6/00-246/00; C08F293/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br><br>A | JP 2018-536055 A (ACRYLIAN) 06 December 2018 (2018-12-06)<br>claims 1-15, paragraphs [0009], [0011]-[0014], [0022], [0025], [0026], [0035], examples | 1-3, 7-8, 12-15<br><br>4-6, 9-11 |
| A | CN 110938183 A (HUBEI UNIVERSITY OF TECHNOLOGY) 31 March 2020 (2020-03-31)<br>claims 1-10, example 5 | 1-15 |
| A | JP 2007-112937 A (NAGAOKA UNIVERSITY OF TECHNOLOGY) 10 May 2007 (2007-05-10)<br>claims 1-8, examples | 1-15 |
| A | CHEN, Ming et al. Synthesis of Functionalized RAFT Agents for Light Harvesting Macromolecules. Macromolecules. 2004, vol. 37, pp. 5479-5481<br>particularly, schemes 2, 3, entire text | 1-15 |
| A | JP 2010-222285 A (WAKAYAMA PREFECTURE) 07 October 2010 (2010-10-07)<br>claims 1-7, examples | 1-15 |
| A | WO 2017/170974 A1 (KURARAY COMPANY, LIMITED) 05 October 2017 (2017-10-05)<br>claims 1-6, examples | 1-15 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 April 2022** | **17 May 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/010635**

| Patent document cited in search report | Publication date (day/month/year) | Patent family member(s) | Publication date (day/month/year) |
|---|---|---|---|
| JP 2018-536055 A | 06 December 2018 | US 2018/0312619 A1<br>claims 1-20, paragraphs [0039]-[0043], [0052]-[0063], [0084]-[0091], [0098]-[0105], [0138]-[0142], examples<br>WO 2017/081425 A1<br>EP 3373992 A1<br>CN 108348642 A<br>KR 10-2018-0082446 A | |
| CN 110938183 A | 31 March 2020 | (Family: none) | |
| JP 2007-112937 A | 10 May 2007 | (Family: none) | |
| JP 2010-222285 A | 07 October 2010 | (Family: none) | |
| WO 2017/170974 A1 | 05 October 2017 | US 2019/0119414 A1<br>claims 1-6, examples<br>EP 3438139 A1<br>CN 109071716 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017170974 A
- JP 2014129503 A
- JP 2002053728 A

### Non-patent literature cited in the description

- Highly Efficient Cobalt-Mediated Radical Polymerization of Vinyl Acetate. *Angewandte Chemie International Edition,* 2005, vol. 44, 1101-1104
- Radical Copolymerizability of Alkyl Cinnamate and Alkyl Atropate. *Journal of Industrial Chemistry,* 1967, vol. 70 (11), 1941-1944
- *Nature Chemistry,* 2014, vol. 6, 179-187